# EUROPEAN PATENT SPECIFICATION

(11) **EP 3 459 690 B1**
(45) Date of publication and mention of the grant of the patent: **09.08.2023**
(21) Application number: 17799661.8
(22) Date of filing: 17.05.2017
(51) Int. Cl.: B25J 11/00, B25J 9/00, B25J 9/16, B25J 19/02, A47L 9/28, G05D 1/02

(54) **MOBILE ROBOT AND CONTROL METHOD THEREFOR**
MOBILER ROBOTER UND STEUERUNGSVERFAHREN DAFÜR
ROBOT MOBILE ET SON PROCÉDÉ DE COMMANDE

(30) Priority: 17.05.2016 KR 20160060444; 01.09.2016 KR 20160112779; 27.10.2016 KR 20160141106
(43) Date of publication of application: 27.03.2019
(73) Proprietor: LG Electronics Inc., Seoul 07336 (KR)
(72) Inventor: JUN, Woochan, Seoul 08592 (KR); SUNG, Chulmo, Seoul 08592 (KR)
(74) Representative: Vossius & Partner Patentanwälte Rechtsanwälte mbB
(86) International application number: PCT/KR2017/005135
(87) International publication number: WO 2017/200304

(56) References cited:
- CN-U- 205 031 182
- DE-A1-102012 112 740
- JP-A- 2013 104 858
- KR-A- 20150 050 160
- KR-A- 20160 043 184
- US-A1- 2011 245 972
- US-A1- 2015 168 954
- US-A1- 2015 168 954

## Description

### [Technical Field]

The present invention relates to a mobile robot and a method of controlling the same, and more particularly, to a mobile robot and a method of controlling the same, for detecting and avoiding an obstacle.

### [Background Art]

In general, a mobile robot is a device that absorbs foreign substances such as dust from a floor and automatically cleans the floor while autonomously driving within a clean target area without user manipulation.

In general, the mobile robot detects a distance to an obstacle such as furniture, stationery, and a wall, which are installed in a cleaning area, and accordingly, maps a cleaning area or controls driving of a left wheel and a right wheel to perform obstacle avoidance.

Conventionally, a distance by which a mobile robot moves is measured through a sensor for monitoring a ceiling or a floor and a distance to an obstacle is calculated based on the measurement result, but this is an indirect method of estimating the distance to the obstacle based on a moving distance of a mobile robot, and thus, when a moving distance of a mobile robot is not capable of being accurately measured due to unevenness of the floor, or the like, the distance to the obstacle inevitably has an error. In particular, a distance measurement method that is mainly used in the mobile robot uses infrared rays or ultrasonic waves, and thus, there is a problem in that a large amount of light or sound is scattered by an obstacle to cause a significant error in distance measurement.

Accordingly, a technology for emitting light in a specific pattern toward a front side of a mobile robot, capturing an image, extracting a pattern from the captured image, recognizing a situation of an obstacle within a cleaning area based on the extracted pattern, and controlling driving has been applied. For example, Korean Patent Publication No. 10-2013-0141979 (hereinafter, referred to as '979 invention') discloses a mobile robot including a light source unit for emitting light with a cross pattern and a camera unit for acquiring an image of a front side of a cleaning device.

However, such a conventional mobile robot is configured to emit light at a predetermined angle from one light source, and thus, there is a limit in a range for detecting an obstacle and it is difficult to recognize a three-dimensional shape of an obstacle with a predetermined height.

In addition, when a mobile robot goes up a threshold or an obstacle with a predetermined height or less, the mobile robot incorrectly determines them as an obstacle or a cliff as a body of the mobile robot is inclined, and thus, there is a problem in that the mobile robot is not driven any longer and is maintained to be confined by an obstacle.

US 2015/0168954 A1 relates to an obstacle detector for a mobile robot while the robot is in motion. The detector includes at least one light source configured to project pulsed light in the path of the robot; a visual sensor for capturing a plurality of images of light reflected from the path of the robot; a processing unit configured to extract the reflections from the images; and an obstacle detection unit configured to detect an obstacle in the path of the robot based on the extracted reflections. The reflections of the projected light are extracted by subtracting pairs of images in which each pair includes a first image captured with the at least one light source on and a second image captured with the at least one light source off, and then combining images of two or more extracted reflections to suppress the background.

### [Disclosure]

### [Technical Problem]

Therefore, the present invention has been made in view of the above problems, and it is an object of the present invention to provide a mobile robot, which detects inclination of the mobile robot to perform inclination compensation depending on an inclination degree of the mobile robot and re-determines an obstacle based on the compensation result to drive the mobile robot, and a method of controlling the mobile robot.

### [Technical Solution]

In accordance with the present invention, the above and other objects can be accomplished by the provision of a mobile robot including a body driven in a cleaning area and for absorbing foreign substances on a floor in the cleaning area, a sensor unit for detecting inclination of the body and inputting a detection signal, a first pattern emission unit disposed on a front surface of the body and for emitting first pattern light toward a lower side of a front side of the body, a second pattern emission unit disposed on the front surface of the body, disposed below the first pattern emission unit, and for emitting second pattern light toward an upper side of the front side of the body, an image acquirer disposed on the front surface of the body and for acquiring an image of the front side of the body, and a controller for detecting a first light pattern corresponding to the first pattern light and a second light pattern corresponding to the second pattern light from the acquired image input from the image acquirer, determining an obstacle, and performing control to pass or avoid the obstacle, wherein the controller determine whether the body is inclined based on the detection signal input from the sensor unit, and when the body is inclined, the controller re-determines whether the obstacle is present through inclination compensation with respect to the first light pattern depending on the inclination of the body.

In accordance with another aspect of the present invention, there is provided a method of controlling a mobile robot, including emitting first pattern light and second pattern light and driving the mobile robot while capturing an image positioned in front of the mobile robot, sensing a first light pattern corresponding to the first pattern light and a second light pattern corresponding to the second pattern light from the captured acquired image to detect an obstacle, detecting inclination of the body, when the body is inclined, performing inclination compensation on the first light pattern or the second light pattern depending on the inclination, and, after the inclination compensation is performed, re-determining the obstacle and driving the mobile robot to pass or avoid the obstacle.

### [Advantageous Effects]

According to a mobile robot an a method of controlling the same according to the present invention, when an obstacle is determined using patterns that are arranged and emitted up and down, since inclination of a body is detected to perform inclination compensation with respect to the emitted patterns, the obstacle may be accurately determined and whether the mobile robot is capable of being driven may be re-determined through the inclination compensation to allow the mobile robot to pass or avoid the obstacle, and thus, the mobile robot may enter various areas to extend an area to be cleaned, may rapidly perform determination and operations, and may be effectively driven to avoid the obstacle without being confined by the obstacle.

### [Description of Drawings]

FIG. 1A is a perspective view of a mobile robot according to an exemplary embodiment of the present invention.
FIG. 1B is a perspective view of a mobile robot according to another exemplary embodiment of the present invention.
FIG. 2 is a diagram showing a horizontal viewing angle of the mobile robot of FIG. 1.
FIG. 3A is a front view of the mobile robot of FIG. 1A.
FIG. 3B is a front view of the mobile robot of FIG. 1B.
FIG. 4 is a diagram showing a bottom surface of the mobile robot of FIG. 1.
FIG. 5 is a block diagram showing main components of the mobile robot of FIG. 1.
FIG. 6 is a front view and a side view of an obstacle detector according to the first embodiment.
FIG. 7 is a diagram showing a pattern emission range and an obstacle detection range of the obstacle detector of FIG. 6.
FIG. 8 is a front view and a side view of an obstacle detector according to the second embodiment of the present invention.
FIG. 9 is a diagram showing a pattern emission range and an obstacle detection range of the obstacle detector of FIG. 8.
FIG. 10 is a diagram showing a pattern light emitted by the first pattern emission unit shown in FIG. 1A.
FIG. 11 is a diagram showing an example of a shape of a pattern emitted to an obstacle by the mobile robot shown in FIG. 1A.
FIG. 12 is a diagram showing pattern light shown in FIG. 1B.
FIG. 13 is a diagram sowing an acquired image depending on a change in a position of the mobile robot shown in FIG. 1B.
FIG. 14 is a diagram showing an acquired image of pattern light emitted to an obstacle of the mobile robot shown in FIG. 1B.
FIG. 15 is a diagram for explanation of inclination of a body of a mobile robot according to an exemplary embodiment of the present invention.
FIG. 16 is a diagram showing an example of a pattern based on inclination of the mobile robot of FIG. 15.
FIG. 17 is a diagram showing an example of entrance into a slope way of a mobile robot according to an exemplary embodiment of the present invention.
FIG. 18 is a diagram showing a change in pattern along with entrance into a slope way of the mobile robot of FIG. 17.
FIG. 19 is a diagram showing another example of entrance into a slope way of a mobile robot according to an exemplary embodiment of the present invention.
FIG. 20 is a diagram showing a change in pattern along with entrance into a slop way of the mobile robot of FIG. 19.
FIG. 21 is a diagram showing an example of inclination compensation of a mobile robot according to an exemplary embodiment of the present invention.
FIG. 22 is a diagram showing another example of inclination compensation of a mobile robot according to an exemplary embodiment of the present invention.
FIG. 23 is a flowchart showing a control method of compensating for inclination of a mobile robot according to an exemplary embodiment of the present invention. and
FIG. 24 is a flowchart showing a driving method using inclination compensation of a mobile robot according to an exemplary embodiment of the present invention.

### [Best Mode]

Hereinafter, the present invention will be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Throughout this specification, like reference numerals in the drawings denote like elements. In addition, a mobile robot may include a controller and units, which are embodied as one or more processors or are embodied as a hardware device.

Reference will now be made in detail to the exemplary embodiments of the present invention, examples of which are illustrated in the accompanying drawings.

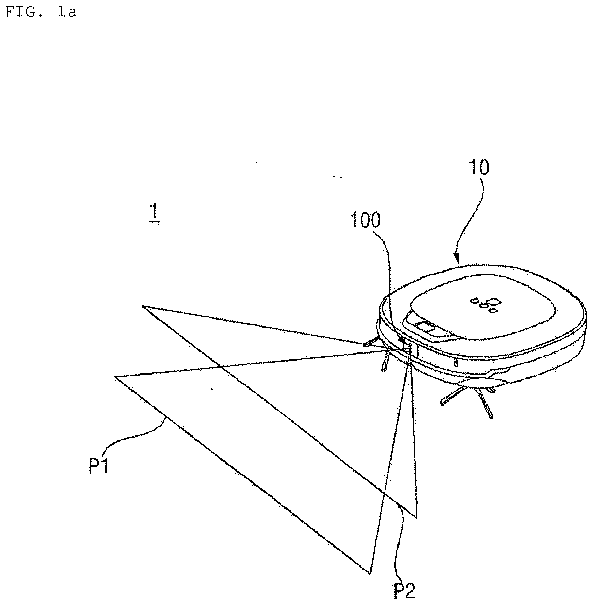

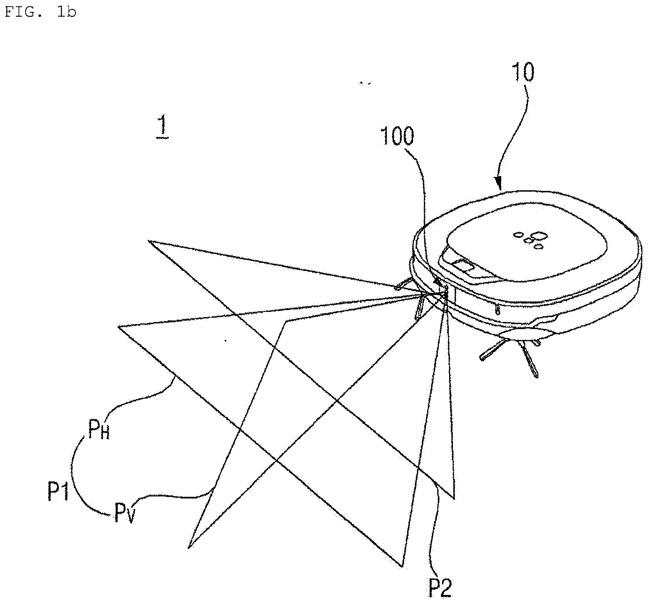

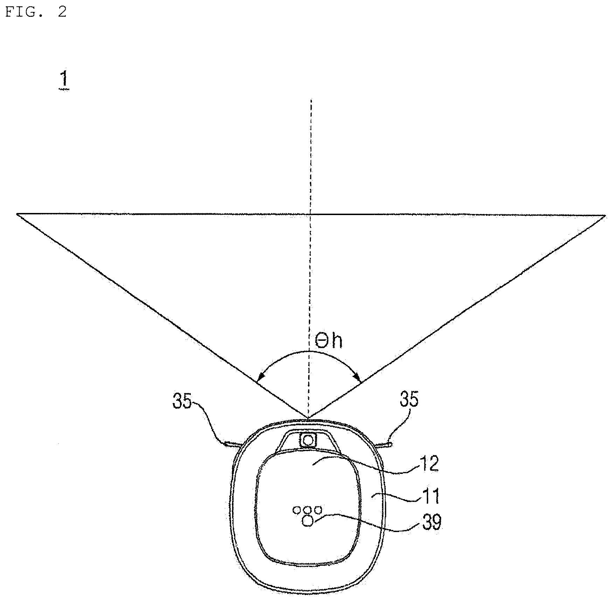

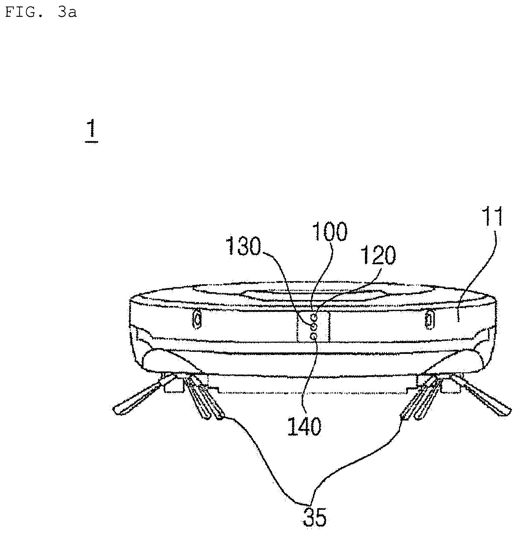

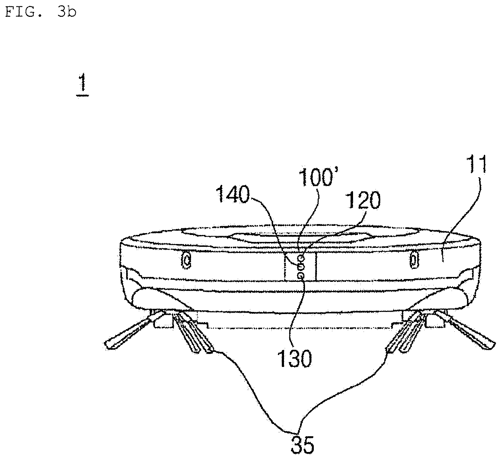

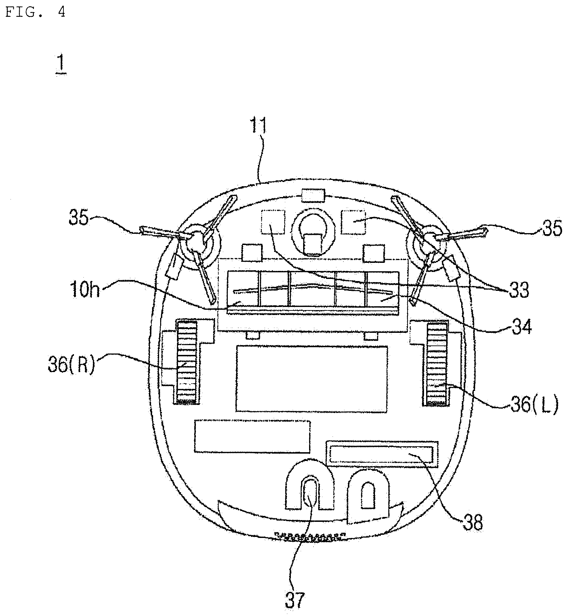

FIG. 1A is a perspective view of a mobile robot according to an exemplary embodiment of the present invention. FIG. 1B is a perspective view of a mobile robot according to another exemplary embodiment of the present invention. FIG. 2 is a diagram showing a horizontal viewing angle of the mobile robot of FIG. 1. FIG. 3A is a front view of the mobile robot of FIG. 1A. FIG. 3B is a front view of the mobile robot of FIG. 1B. FIG. 4 is a diagram showing a bottom surface of the mobile robot of FIG. 1.

Referring to FIGS. 1 to 4, a mobile robot 1 according to an exemplary embodiment of the present invention may be moved along a floor of a cleaning area, and may include a body 10 for absorbing foreign substances such as dust on the floor and an obstacle detection unit 100 disposed on a front surface of the body 10.

The body 10 may include a casing 11 that forms an outer appearance and forms a space for accommodating therein components included in the body 10, an absorption unit 34 that is disposed in the casing 11 and absorbs foreign substances such as dust or waste, and a left wheel 36(L) and a right wheel 36(R) that are rotatably installed in the casing 11. As the left wheel 36 (L) and the right wheel 36(R) are rotated, the body 10 may be moved along the floor of the cleaning area, and during this procedure, foreign substances may be absorbed through the absorption unit 34.

The absorption unit 34 may include a cleaning roller or a brush, an absorption fan (not shown) for generating absorption force, and an absorption inlet 10h for absorbing air current generated via rotation of an absorption fan. The absorption unit 34 may include a filter (not shown) for collecting foreign substances in the air current absorbed through the absorption inlet 10h and a foreign substances collection container (not shown) in which foreign substances collected by the filter are accumulated.

The body 10 may include a driving driver 300 (or a driving module) for driving the left wheel 36(L) and the right wheel 36(R). The driving driver may include at least driving motor. For example, at least one driving motor may include a left wheel driving motor for rotation of the left wheel 36(L) and a right wheel driving motor for rotation of the right wheel 36(R).

An operation of the left wheel driving motor and the right wheel driving motor may be independently controlled by a driving controller of a controller, and thus, the body 10 may be moved forward, may be moved backward, or may turn. For example, when the body 10 is moved forward, the left wheel driving motor and the right wheel driving motor may be rotated in the same direction, but when the left wheel driving motor and the right wheel driving motor are rotated at different speeds or are rotated in different directions, a driving direction of the body 10 may be changed. The body 10 may further include at least one auxiliary wheel 37 for stably supporting the body 10.

The body 10 may further include a plurality of brushes 35 that is positioned at a front side of a bottom surface unit of the casing 11 and has brushes including a plurality of wings that radially extend. Through rotation of the plurality of brushes 35, dusts may be removed from a floor of a cleaning area, and the dusts collected from the floor may be absorbed through the absorption inlet 10h and may be collected in a collection container.

The body 10 may further include a control panel 39 that is disposed on an upper surface of the casing 11 and receives various commands for control of the mobile robot 1 from a user.

The obstacle detection unit 100 (or an obstacle detection module) may be disposed on a front surface of the body 10.

The obstacle detection unit 100 may be fixed to the front surface of the casing 11 and may include a first pattern emission unit 120, a second pattern emission unit 130, and an image acquirer 140.

Pattern light emitted by the first pattern emission unit 120 and the second pattern emission unit 130 may be emitted in different patterns shown in FIGS. 1A and 1B. The first and second pattern emission units of FIGS. 1A and 1B are denoted by the same reference numeral. A shape of the emitted pattern is not limited to the drawings.

As shown in FIG. 1A, the first pattern emission unit 120 may emit light of a first pattern P1 (hereinafter, referred to first pattern light) toward a lower side of the front side of the body 10. The second pattern emission unit 120 may emit light of a second pattern P2 (hereinafter, referred to as second pattern light) toward an upper side of the front side of the body 10. The first pattern emission unit 120 and the second pattern emission unit 130 may be formed to emit the first pattern light and the second pattern light in the form of a straight line and in a horizontal direction when the first pattern light and the second pattern light are incident on a floor or an obstacle.

As shown in FIG. 1B, the first pattern emission unit 120 may emit light of an 11^{th} pattern P11 (hereinafter, referred to as 11^{th} pattern light) toward a lower side of the front side of the body 10. Accordingly, the 11^{th} pattern light P11 may be emitted toward the floor of the cleaning area. The 11^{th} pattern light P11 may be configured in a cross pattern in which a horizontal line Ph and a vertical line Pv cross each other.

The second pattern emission unit 120 may emit light of a 12^{th} pattern P12 (hereinafter, referred to as 12^{th} pattern light) toward an upper side of the front side of the body 10. The 12^{th} pattern light may be configure in a straight form and may be formed in parallel to the horizontal line Ph of the 11^{th} pattern light.

As shown in FIG. 3A, the obstacle detection unit 100 according to a first embodiment of the present invention may be configured in such a way that the image acquirer 140 is disposed below the first pattern emission unit 120 and the second pattern emission unit 130 in a line.

As shown in FIG. 3B, an obstacle detection unit 100' according to a second embodiment of the present invention may be configured in such a way that the image acquirer 140 is disposed between the first pattern emission unit 120 and the second pattern emission unit 130 in a line. The image acquirer 140 may be disposed in such a way that distances to the center of the first pattern emission unit 120 and to the center of the second pattern acquirer 140 from the image acquirer 140, that is, distances to the first pattern emission unit and the second pattern emission unit from the image acquirer 140 are the same.

In the obstacle detector according to the first and second embodiment, shapes of the pattern of light emitted from the first pattern emission unit and the second pattern emission unit may be any form of the straight line described above with reference to FIG. 1A and the cross pattern described above with reference to FIG. 1B.

As another example, one or more obstacle detectors may be further disposed on any one of an upper surface and a lateral surface of the body 10, and a floor as well as a front surface of the body 10.

The first pattern emission unit and the second pattern emission unit of the obstacle detector may be configured separately or configured as one module. For example, a lens, a splitter, a mirror, or a component for transmitting a light pattern may be included in the pattern emission unit, and the first light pattern and the second light pattern may be emitted from one pattern emission unit.

As shown in FIG. 4, the body 10 may include a rechargeable battery 38, and a charging terminal 33 of the battery 38 may be connected to a commercial power source (e.g., a power socket in the home) or the body 10 may be docked on a separate charging stand (not shown) connected to the commercial power source and may be connected to the commercial power source to recharge the battery 38. Electrical components included in the mobile robot 1 may receive power from the battery 38, and accordingly, when the battery 38 is recharged, the mobile robot 1 may autonomously drive in a state in which the mobile robot 1 is electrically separated from the commercial power source.

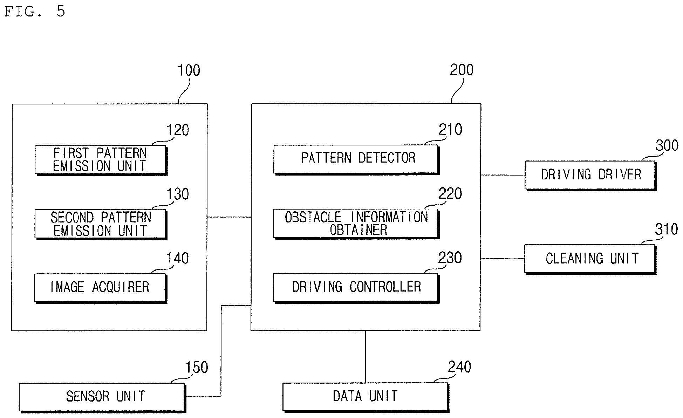

FIG. 5 is a block diagram showing main components of the mobile robot of FIG. 1.

The mobile robot 1 may include the driving driver 300, a cleaning unit 310, a data unit 240, the obstacle detection unit 100, and a controller 200 for controlling an overall operation.

The controller 200 may be embodied as one or more processors or may be embodied as a hardware device.

The controller 200 may include a driving controller 230 for control of the driving driver 300. An operation of the left wheel driving motor and an operation of the right wheel driving motor may be independently controlled by the driving controller 230, and thus, the body 10 may drive straight or rotate.

The controller 200 may include a pattern detector 210 for analyzing data input from the obstacle detection unit 100 to detect a pattern, and an obstacle information obtainer 220 for determining an obstacle from the pattern.

The pattern detector 210 may detect the light patterns P1 and P2 from the image (acquired image) acquired by the image acquirer 140. Hereinafter, the light pattern is exemplified with respect to the first and second pattern light P1 and P2 of FIG. 1A, but the light pattern with respect to the 11^{th} and 12^{th} pattern light of FIG. 1B may be applied in the same way.

The pattern detector 210 may detect features such as a dot, a line, and a surface from predetermined pixels constituting the acquired image, and may detect a dot, a line, and a surface constituting the light patterns P1 and P2 or the light patterns P1 and P2 based on the detected feature.

The obstacle information obtainer 220 may determine whether an obstacle is present and may determine a shape of the obstacle based on the pattern detected from the pattern detector 210.

The driving driver 300 may include at least one driving motor and may drive the mobile robot 1 according to a control command of the driving controller 230. As described above, the driving driver 300 may include the left wheel driving motor for rotation of the left wheel 36(L) and the right wheel driving motor for rotation of the right wheel 36(R).

The cleaning unit 310 may operate the brush to make dust or foreign substances about the mobile robot 1 be easily absorbed and may operate an absorption device to absorb dust or foreign substances. The cleaning unit 310 may control an operation of the absorption fan included in the absorption unit 34 for absorbing foreign substances such as dust or waste to make dust be put into the foreign substances collection container through the absorption inlet.

The data unit 240 may store the acquired image input from the obstacle detection unit 100, may store reference data for determination of an obstacle by the obstacle information obtainer 220, and may store obstacle information on the detected obstacle. The data unit 240 may store control data for control of an operation of the mobile robot 1 and data based on a cleaning mode of the mobile robot 1 and may store a map that is generated or received from the outside.

The data unit 240 may store data readable by a micro processor and may include a hard disk drive (HDD), a solid state disk (SSD), a silicon disk drive (SDD), ROM, RAM, CD-ROM, a magnetic tape, a floppy disk, and an optical data storage device.

The obstacle detection unit 100 may include the first pattern emission unit 120, the second pattern emission unit 130, and the image acquirer 140.

The obstacle detection unit 100 may be configured in such a way that the first pattern emission unit 120, the second pattern emission unit 130, and the image acquirer 140 are installed on the front surface of the body 10, emit the first and second pattern light P1 and P2 to the front side of the mobile robot 1, and photograph the emitted pattern light to acquire an image.

The controller 200 may store the acquired image in the data unit 240 and the pattern detector 210 may analyzes the acquired image to extract a pattern. That is, the pattern detector 210 may extract the light pattern obtained by emitting patter light emitted from the first pattern emission unit or the second pattern emission unit to a floor or an obstacle. The obstacle information obtainer 220 may determine the obstacle based on the extracted light pattern.

The controller 200 may control the driving driver 300 to determine the obstacle from the acquired image input from the obstacle detection unit 100 and to change a moving direction or a driving path to enable driving while avoiding the obstacle.

Since the mobile robot 1 falls in the case of a cliff among the obstacles, the controller 200 may detect the cliff through the acquired image and may recheck whether the cliff is present through an included cliff sensor (not shown), and may control the mobile robot 1 not to fall off the cliff. When the controller 200 determines a current object as the cliff, the controller 200 may determine whether the pattern is changed based on the acquired image and may control the driving driver 300 to enable driving along the cliff.

The controller 200 may determine whether the body is inclined based on inclination information input from an inclination sensor of a sensor unit 150, and when the body is inclined, the controller 200 may perform inclination compensation with respect to a position of the light pattern of the acquired image.

The obstacle information obtainer 220 may re-determine the obstacle by compensating for the inclination with respect to a light pattern of the acquired image in response to the inclination of the body, detected by the inclination sensor. When the obstacle information obtainer re-determines the obstacle, the driving controller may determine whether the mobile robot 1 is capable of driving based on the re-determined obstacle, may set a driving path, and may control the driving driver 300.

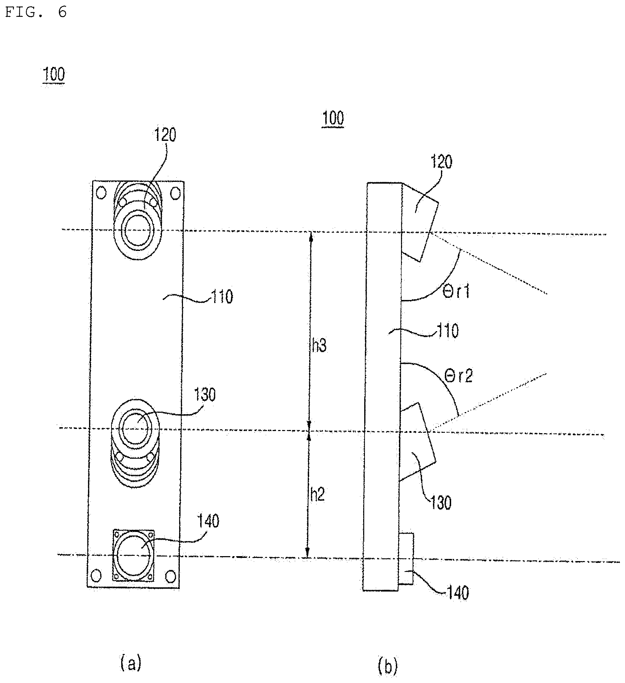

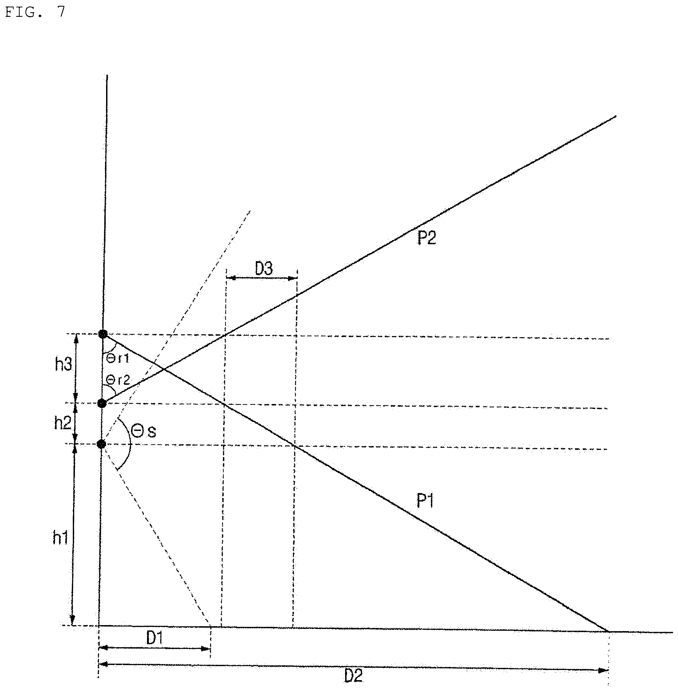

FIG. 6 is a front view and a side view of an obstacle detector according to the first embodiment. FIG. 7 is a diagram showing a pattern emission range and an obstacle detection range of the obstacle detector of FIG. 6. FIG. 6A is a front view of the obstacle detector and FIG. 6B is a side view of the obstacle detector.

As shown in FIGS. 6A and 6B, the obstacle detection unit 100 according to the first embodiment may include the first and second pattern emission units 120 and 130 that function as a light source, and an optical pattern projection element (OPPE) for transmitting light emitted from the light source to generate a predetermined pattern. The light source may be a laser diode (LD), a light emitting diode (LED), or the like. Since a laser beam has excellent feature in terms of monochromatic feature, straightness, and connection features compared with other light sources, it may be possible to precisely measure a distance, and in particular, there is a problem in that infrared rays or visible rays have a large difference in terms of the precision of distance measurement depending on a factor such as color or material of the object, and thus, a laser diode (LD) may be desirably used as a light source. A pattern generation unit may include a lens and a diffractive optical element (DOE). Depending on the configuration of a pattern generation unit included in each of the pattern emission units 120 and 130, light with various patterns may be emitted.

The first pattern emission unit 120 may emit the first pattern light P1 toward a lower side of the front side of the body 10. Accordingly, the first pattern light P1 may be incident on a floor of a cleaning area.

The first pattern light P1 may be configured in the form of a horizontal line.

The first pattern light P1 may also be configured in the form of a cross pattern in which a horizontal line and a vertical line cross each other.

The first pattern emission unit 120, the second pattern emission unit 130, and the image acquirer 140 may be perpendicularly arranged in a line. The image acquirer 140 may be disposed below the first pattern emission unit 120 and the second pattern emission unit 130, but the present invention is not limited thereto, and thus, the image acquirer 140 may be disposed above the first pattern emission unit and the second pattern emission unit.

According to an exemplary embodiment, the first pattern emission unit 120 may be disposed in a relatively upper side to emit the first pattern light P1 downward to detect an obstacle positioned below the first pattern emission unit 120, and the second pattern emission unit 130 may be positioned below the first pattern emission unit 120 to the second pattern light P2 forward and upward. Accordingly, the second pattern light P2 may be incident on an obstacle or a predetermined portion of an obstacle, which is positioned above at least the second pattern emission unit 130 from a floor of a cleaning area.

The second pattern light P2 may have a different pattern from the first pattern light P1 and may be configured to include a horizontal line. Here, the horizontal line may not be necessarily a continuous line and may be configured with a dotted line.

In the FIG. 2 described above, an indicated emission angle θh may be a horizontal emission angle of the first pattern light P1 emitted from the first pattern emission unit 120, may indicate an angle of opposite ends of a horizontal line with respect to the first pattern emission unit 120, and may be determined in the range of 130° to 140°, but is not limited thereto. A dotted line shown in FIG. 2 is directed toward the front side of the mobile robot 1, and the first pattern light P1 may be configured to be symmetrical with each other. The first pattern light and the second pattern light are formed to be spaced apart from each other by a predetermined distance from the body 10. When a light pattern is emitted to an obstacle within the width of the detected light pattern based on a horizontal line of the pattern emission units, the light pattern may be analyzed, and a distance to the obstacle from the body of the mobile robot based on a position of the light pattern and a distance between the body and the light pattern.

The second pattern emission unit 130 may also have a horizontal emission angle that is determined in the range of 130° to 140° like the first pattern emission unit 120, and in some embodiments, the second pattern emission unit 130 may emit the second pattern light P2 at the same horizontal emission angle as the first pattern emission unit 120, and in this case, the second pattern light P1 may also be configured to be symmetrical with each other with respect to a dotted line shown in FIG. 2.

The image acquirer 140 may acquire an image of a front side of the body 10. The front side may refer to a side toward which the body of the mobile robot is driven and the light pattern is emitted from the body. In particular, the pattern light P1 and P2 are marked in the image (hereinafter, referred to as the acquired image) acquired by the image acquirer 140, and hereinafter, an image of the pattern light P1 and P2 marked in the acquired image is referred to as a light pattern, and the light pattern is an image acquired by forming the pattern light P1 and P2 that are substantially incident on an actual space, on an image sensor, and thus, the same reference numerals as the pattern light P1 and P2 are denoted for the light patterns, and images corresponding to the first pattern light P1 and the second pattern light P2 will be referred to as the first light pattern P1 and the second light pattern P2, respectively.

The image acquirer 140 may include a digital camera for converting an image of an object into an electrical signal and then re-converting the electrical signal into a digital signal and recording the digital signal in a memory device, and the digital camera may include an image sensor (not shown) and an image processor (not shown).

An image sensor may be a device for converting an optical image into an electrical signal, and may include a chip formed by integrating a plurality of photo diode into each other, and in this case, the photo diode may be, for example, a pixel. Electric charges may be accumulated on each of pixels constituting an image formed on the chip via light passing through a lens, and the electric charges accumulated on the pixels may be converted into an electrical signal (e.g., voltage). As the image sensor, a charge coupled device (CCD), a complementary metal oxide semiconductor (CMOS), etc. have been well known.

The image processor may generate a digital image based on an analog signal output from an image sensor. The image processor may include an analog digital (AD) converter for converting an analog signal into a digital signal, a buffer memory for temporarily recording digital data according to the digital signal output from the AD converter, and a digital signal processor (DSP) for processing information recorded in the buffer memory to constitute a digital image.

The pattern detector 210 may detect the feature such as a dot, a line, and a surface from predetermined pixels constituting the acquired image and may detect the light patterns P1 and P2 or dots, lines, surfaces, etc. constituting the light patterns P1 and P2 based on the detected feature.

For example, the pattern detector 210 may extract lines formed by continuously configuring light pixels compared with the surrounding area and may extract a horizontal line constituting the first light pattern P1 and a horizontal line constituting the second light pattern P2.

However, the present invention is not limited thereto, and various schemes of extracting a pattern in a desired shape from a digital image have been known, and thus, the pattern detector 210 may extract the first light pattern P1 and the second light pattern P2 using these known technologies.

As shown in FIG. 7, the first pattern emission unit 120 and the second pattern emission unit 130 may be disposed to be symmetrical with each other. The first pattern emission unit 120 and the second pattern emission unit 130 may be disposed up and down by a distance of h3, and in this case, the first pattern emission unit may emit the first pattern light downward and the second pattern emission unit may emit the second pattern light upward, and thus, the pattern light emitted from the first pattern light and the pattern light emitted from the second pattern light may cross each other.

The image acquirer 140 may be disposed below the second pattern emission unit by a distance h2 to capture an image of a front side of the body 10 at a viewing angle θs in up and down directions. The image acquirer 140 may be installed at a position corresponding to a distance h1 from the floor. The image acquirer 140 may be installed at a position not to interrupt photograph of a front side of the body 10 in consideration of a shape of a bumper (not shown) constituting a lower end of a front portion of the body 10 of the mobile robot 1 or a structure for driving or cleaning.

The first pattern emission unit 120 or the second pattern emission unit 130 may be installed in such a way that directions toward which an optical axis of lenses included in each of the first and second pattern emission units 120 and 130 is directed correspond to a predetermined emission angle.

The first pattern emission unit 120 may emit downward the first pattern light P1 at a first emission angle θr1 and the second pattern emission unit 130 may emit upward the second pattern light P2 at a second emission angle θr2. In this case, the first emission angle and the second emission angle may be basically different, but as necessary, the first emission angle and the second emission angle may be set to be equal to each other. The first emission angle and the second emission angle may be 50° to 75°, but are not limited thereto. For example, the first emission angle may be set to 60° to 70° and the second emission angle may be set to 50° to 55°. The first and second emission angles may be changed depending on a structure of a lower bumper of the mobile robot 1 or a distance for detecting a lower object, and a height of an upper portion to be detected.

When pattern light emitted from the first pattern emission unit 120 and/or the second pattern emission unit 130 is incident on an obstacle, positions of the light patterns P1 and P2 of the acquired image may be changed depending on a position of the obstacle spaced apart from the first pattern emission unit 120. For example, when the first pattern light P1 and the second pattern light P2 are incident on a predetermined obstacle, the first light pattern P1 may be marked at a high position in the acquired image as the obstacle is positioned closer to the mobile robot 1, and in an opposite case, the second light pattern P2 may be marked a low position. That is, when distance data to an obstacle, corresponding to a row (a line including pixels arranged in a lateral direction) constituting an image generated by the image acquirer 140, is pre-stored and then the light patterns P1 and P2 detected from the image acquired through the image acquirer 140 are detected from a predetermined row, a position of the obstacle from the distance data to the obstacle corresponding to the row may be estimated.

The image acquirer 140 may be disposed in such a way that an optical axis of a lens is directed toward a horizontal direction, and θs shown in FIG. 7 may be a viewing angle of the image acquirer 140, but may be set to 100° or greater, in detail, 100° to 110°, but the present invention is not limited thereto.

A distance to the image acquirer 140 from the floor of the cleaning area may be determined as about 60 mm to about 70mm, and in this case, the floor of the cleaning area is present after D1 from the image acquirer in the image acquired by the image acquirer 140, and D2 is a position of the floor of the acquired image, at which the first light pattern P1 is marked. In this case, when the obstacle is positioned at D2, an image when the first pattern light P1 is incident on the obstacle may be acquired by the image acquirer 140. When the obstacle is positioned closer to the mobile robot 1 than D2, the first light pattern may be marked above a reference position 'ref1' so as to correspond to the incident first pattern light P1.

The reference position 'ref1' is a position at which the first light pattern is marked when the body 10 is positioned on a flat floor, and when the first light pattern is emitted to D2, the image acquirer may be set to a position at which the first light pattern is photographed. The reference position may be a reference for determining a flat state of a floor without an obstacle in front of the body, that is, a normal state.

Here, a distance to D1 from the body 10 may be 100 mm to 150 mm and a distance to D2 may be 180 mm to 280 mm, but the present invention is not limited thereto. D3 may be a distance to a most protruding portion at which second pattern light is incident from a portion of a front side of a body, and the obstacle is detected while the body is moved, and thus, D3 is a minimum distance for detecting the obstacle at a front side (upper portion) without collision with the obstacle. D3 may be set to about 23 mm to about 30 mm.

During driving of the body 10, when the first light pattern P1 disappears from the acquired image or on a portion of the first light pattern is marked in the acquired image, the obstacle information obtainer 220 may determine that a cliff is present around the mobile robot 1.

When the first light pattern is not marked in the acquired image, the obstacle information obtainer 220 may recognize a cliff present in front of the mobile robot 1. When a cliff (e.g., stair) is present in front of the mobile robot 1, the first pattern light is not incident on the floor, and thus, the first light pattern P1 may disappear from the acquired image.

The obstacle information obtainer 220 may determine that the cliff is present in front of the body 10 to be spaced apart from the body 10 by a distance D2, based on the distance D2. In this case, when the first pattern light P1 has a cross pattern, a horizontal line disappears and only a vertical line is marked, and thus, the obstacle information obtainer 220 may determine that the cliff is present.

When a portion of the first light pattern is not marked, the obstacle information obtainer 220 may determine that a cliff is present on the left or right of the mobile robot 1. When a right portion of the first light pattern is not marked, obstacle information obtainer 220 may determine that the cliff is present on the right of the mobile robot 1.

Accordingly, based on the cliff information recognized by the obstacle information obtainer 220, the driving controller 230 may control the driving driver 300 to drive the mobile robot 1 along a path along which the mobile robot 1 does not fall of the cliff.

When the cliff is present in front of the mobile robot 1, the driving controller 230 may move the mobile robot 1 forward by, for example, D2 or less and may re-check whether the cliff is present using a cliff sensor installed below the body. The mobile robot 1 may primarily check the cliff through the acquired image and may be moved by a predetermined distance to secondarily check the cliff through the cliff sensor.

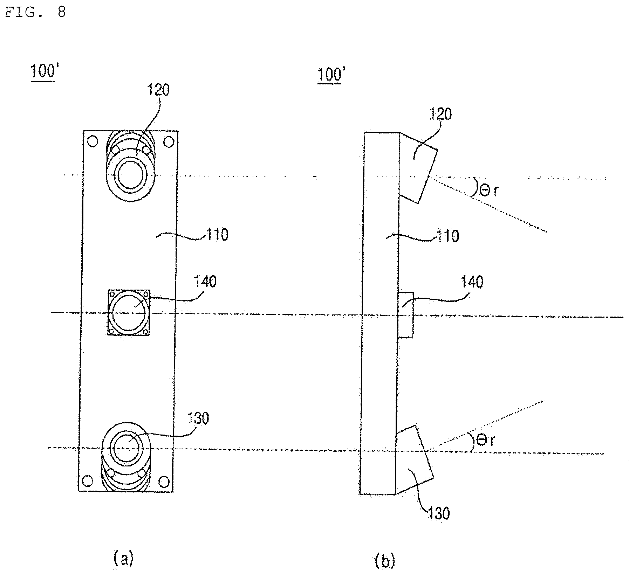

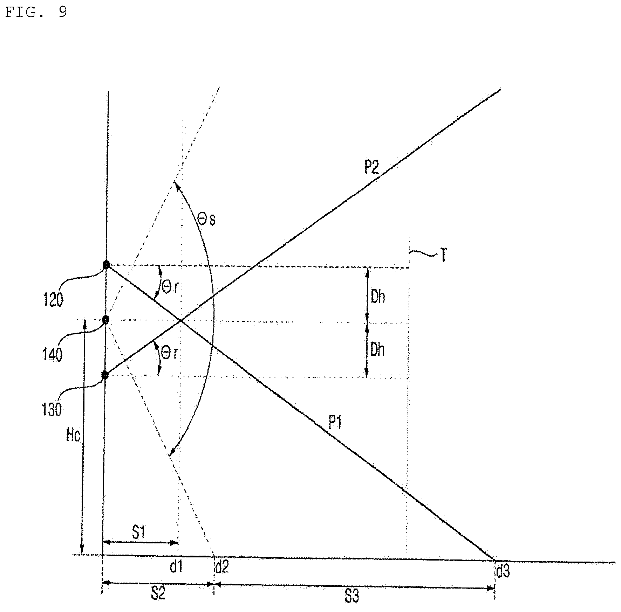

FIG. 8 is a front view and a side view of an obstacle detector according to the second embodiment of the present invention. FIG. 9 is a diagram showing a pattern emission range and an obstacle detection range of the obstacle detector of FIG. 8.

As shown in FIGS. 8A and 8B, the obstacle detection unit 100' according to the second embodiment may include the first and second pattern emission units 120 and 130 and the image acquirer 140. The same reference numeral is used for the same component as in the aforementioned obstacle detection unit 100 according to the first embodiment, and thus, a detailed description of the same component is omitted below.

The obstacle detection unit 100' may further include a module frame 110 that is fixed to a front surface of the casing 11 and vertically extends in a long way, but in some embodiments, the first pattern emission unit 120, the second pattern emission unit 130, and/or the image acquirer 140 may be fixed directly to the casing 11 without the module frame 110.

The obstacle detection unit 100' according to the second embodiment may be configured in such a way that the first pattern emission unit 120, the image acquirer 140, and the second pattern emission unit 130 are disposed in a line. In detail, the image acquirer 140 may be disposed between the first pattern emission unit 120 and the second pattern emission unit 130.

The first pattern emission unit 120 installed at an upper side may emit the first pattern light toward a lower side of a front side of the body 10, and the second pattern emission unit 130 installed at a lower side may emit the second pattern light toward an upper side of the front side of the body 10.

The first pattern light P1 may be emitted toward a floor of a cleaning area. The second pattern light P2 may be incident on an obstacle or a predetermined portion of an obstacle, which is positioned above at least the second pattern emission unit 130 from the floor of the cleaning area.

The image acquirer 140 may acquire an image of a front side of the body 10. In particular, the pattern light P1 and P2 may be marked in the image (hereinafter, referred to as the acquired image) acquired by the image acquirer 140, and hereinafter, an image containing the pattern light P1 and P2 marked in the acquired image is an image of the pattern light P1 and P2 incident on an actual space formed on an image sensor in a light pattern, and thus, may be denoted by the same reference numerals as those of the pattern light P1 and P2 for descriptions.

As shown in FIG. 9, the obstacle detection unit 100' according to the second embodiment may be configured in such a way that the first pattern emission unit 120 is disposed above the image acquirer 140 to be spaced apart therefrom by a distance Dh and the second pattern emission unit 130 is disposed below the image acquirer 140 to be space apart therefrom by a distance Dh. Hereinafter, an angle between a horizontal line and an emission direction of the first pattern emission unit 120 or the second pattern emission unit 130 is defined as a vertical emission angle. In detail, the vertical emission angle may be defined as an angle between a horizontal line and a direction toward which an optical axis of lenses included in each of the first and second pattern emission units 120 and 130 is directed.

The first vertical emission angle of the first pattern emission unit 120 and the second vertical emission angle of the second pattern emission unit 130 may have the same value, that is, θr. However, the first pattern emission unit 120 may emit the first pattern light P1 at an angle θr that is an angle directed downward based on a horizontal line, and the second pattern emission unit 130 may emit the second pattern light P2 at an angle θr that is an angle directed upward based on a horizontal line. θr may be determined in the range of 20° to 30°, but is not limited thereto.

As such, the first pattern emission unit 120 and the second pattern emission unit 130 may be disposed to be symmetrical with each other based on the image acquirer 140 and may be configured to emit light at the same vertical emission angle θr in opposite directions.

Such a symmetrical structure may facilitate calibration or product initialization. When pattern light emitted from the first pattern emission unit 120 or the second pattern emission unit 130 is incident on an obstacle, positions of the light patterns P1 and P2 of the acquired image may be different depending on a position of the obstacle spaced apart from the first pattern emission unit 120. For example, when the first pattern light P1 and the second pattern light P2 are incident on a predetermined obstacle, as the obstacle is positioned closer to the mobile robot 1, the first light pattern P1 -in particular, a horizontal pattern Ph- of the acquired image is marked at a high position, and on the other hand, the second light pattern P2 is marked at a low position. That is, when distance data to an obstacle, corresponding to a row (a line including pixels arranged in a lateral direction) constituting an image generated by the image acquirer 140, is pre-stored and then the light patterns P1 and P2 detected from the image acquired through the image acquirer 140 are detected from a predetermined row, a position of the obstacle from the distance data to the obstacle corresponding to the row may be estimated.

However, to accurately perform this procedure, it needs to be assumed that the first pattern emission unit 120 and the second pattern emission unit 130 are arranged to each accurately emit light at a predetermined vertical emission angle (θr). Whether such assumption is achieved may be checked through a calibration procedure. Calibration may be checked through the following procedure.

The obstacle detection unit 100' may be fixed and a vertical incident plate T (refer to FIG. 7) having a plate directed toward the obstacle detection unit 100' may be installed in front of the obstacle detection unit 100' to be spaced apart therefrom by a predetermined distance. A position of the incident plate T may be a position at which the first pattern light P1 is focused.

In this state, the first pattern emission unit 120 may emit light and the image acquirer 140 may acquire an image. The first light pattern P1 incident on the incident plate T may be marked in the acquired image. Here, since a distance to the incident plate T from the obstacle detection unit 100 is already known, when the obstacle detection unit 100' is normally manufactured without error, the horizontal line Ph of the first light pattern P1 needs to be marked at a predetermined position ref1 (hereinafter, referred to as a reference position) of the acquired image.

When an emission direction of the second pattern emission unit 130 is checked, the obstacle detection unit 100' may be upside down, and then, the aforementioned calibration procedure may be repeatedly performed. That is, the obstacle detection unit 100' may be upside down such that the second pattern emission unit 130 is positioned above the image acquirer 140, and then, the second pattern emission unit 130 may emit light such that the image acquirer 140 acquires an image containing the second light pattern P2 focused on the incident plate T. In this case, when the second pattern emission unit 130 is normal, the second light pattern P2 needs to be detected at the reference position ref1. The image acquirer 140 may be disposed in such a way that an optical axis of a lens is direction toward a horizontal direction, and θr may be a viewing angle of the image acquirer 140 and may be set to 100° or greater, in detail, 100° to 110°, but the present invention is not limited thereto.

Such calibration procedure may also be applied to the obstacle detection unit 100 according to the first embodiment in the same way.

A distance between a floor in a cleaning area and the image acquirer 140 may be determined between about 145 mm and about 155 mm, and in this case, the floor in the cleaning area may be present after a point indicated by d2 in the image acquired the image acquirer 140, and S2 may indicate a region up to a position d3 of a center point (an intersection point between the horizontal line Ph and the vertical line Pv) of the first light pattern P1 of the floor marked in the acquired image. In particular, when an obstacle is present in the region S2, an image formed by emitting the first pattern light P1 on the obstacle may be acquired by the image acquirer 140. Here, a distance to d2 from the body 10 may be set to 100 mm to 120mm, and d3 may be positioned about 400 mm from the mobile robot 1, but the present invention is not limited thereto.

S1 (which is a region up to d1 from the mobile robot 1) shown in FIG. 9 indicates a region in which positions of the first light pattern P1 and the second light pattern P2 are reversed, and when an obstacle is positioned in the region S1, the first pattern light P1 is positioned above the second pattern light P2 in the acquired image. In this case, d1 may be a position spaced apart from the mobile robot 1 by 70 mm to 80 mm, but the present invention is not limited thereto.

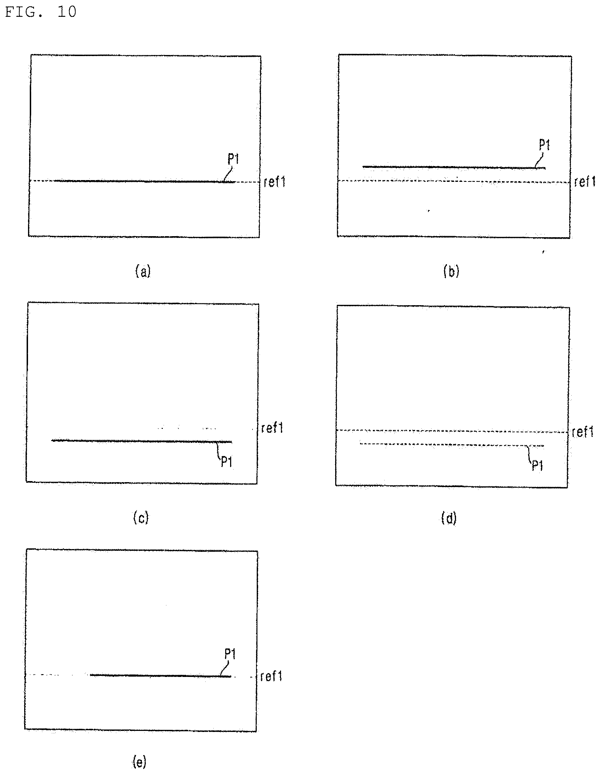

FIG. 10 is a diagram showing a pattern light emitted by the first pattern emission unit shown in FIG. 1A.

Upon receiving an acquired image, the pattern detector 210 may detect the first light pattern or the second light pattern from the acquired image input from the image acquirer 140 and may apply the first light pattern or the second light pattern to the obstacle information obtainer 220.

The obstacle information obtainer 220 may analyze the first light pattern or the second light pattern detected from the acquired image and may compare a position of the first light pattern with the reference position 'ref1' to determine an obstacle.

As shown in FIG. 10A, when a horizontal line of the first light pattern P1 is positioned at the reference position 'ref1' , the obstacle information obtainer 220 may determine the first light pattern P1 to be in a normal state. In this case, the normal state refers to a state in which a floor is flat without unevenness, an obstacle is not present in a front side, and continuous driving is possible.

If an obstacle is present in an upper side of a front side of the mobile robot, the second light pattern P2 is incident on the obstacle and is marked in the acquired image, and thus, the second light pattern P2 is not generally marked in a normal state.

As shown in FIG. 10B, when a horizontal line of the first light pattern P1 is positioned above the reference position 'ref1' , the obstacle information obtainer 220 may determine that an obstacle is present in a front of a mobile robot.

As shown in the drawing, upon detecting an obstacle through the obstacle information obtainer 220, the driving controller 230 may control the driving driver 300 to avoid the obstacle while the mobile robot is driven. The obstacle information obtainer 220 may determine a position and size of the detected obstacle in response to the positions of the first light pattern P1 and the second light pattern P2 and whether the second light pattern is marked in the acquired image. The obstacle information obtainer 220 may determine the position and size of the obstacle in response to a change in the first light pattern and the second light pattern that are marked in the acquired image while the mobile robot is driven.

The driving controller 230 may determine whether the mobile robot is continuously driven with respect to the obstacle or is driven to avoid the obstacle and may control the driving driver 300, based on information of the obstacle, input from the obstacle information obtainer 220. For example, the driving controller 230 may determine that the mobile robot is capable of driving when the obstacle is low, that is, has a height equal to or less than a predetermined height or the mobile robot is capable of entering a space between the obstacle and the floor.

As shown in FIG. 10C, the first light pattern P1 may be marked below the reference position 'ref1' . When the first light pattern P1 is marked below the preference position, the obstacle information obtainer 220 may determine that a downhill slope is present. A downhill slope may be differentiated from a cliff because the first light pattern P1 disappears in the case of the cliff.

As shown in FIG. 10D, when the first light pattern is not marked, the obstacle information obtainer 220 may determine that a cliff is present in a driving direction.

As shown in FIG. 10E, when a portion of the first light pattern is not marked, the obstacle information obtainer 220 may determine that a cliff is present on the left or right of the mobile robot. In this case, the obstacle information obtainer 220 may determine that a cliff is present on the left of the body 10.

When the first light pattern P1 has a cross shape, the obstacle information obtainer 220 may determine an obstacle in consideration of both a position of a horizontal line and a length of a vertical line.

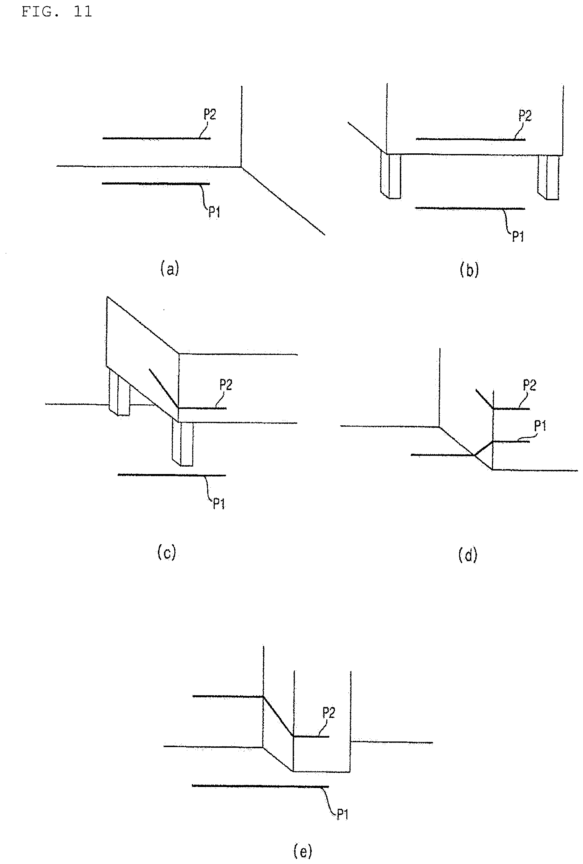

FIG. 11 is a diagram showing an example of a shape of a pattern emitted to an obstacle by the mobile robot 1 shown in FIG. 1A.

As shown in FIG. 11, as pattern light emitted from the obstacle detection unit 100 is incident on an obstacle and a light pattern is marked in the captured acquired image, the obstacle information obtainer 220 may determine the position, size, and shape of the obstacle.

As shown in FIG. 11A, when a wall is present in front of the mobile robot while the mobile robot is driven, the first pattern light may be incident on the floor and the second pattern light may be incident on the wall. Accordingly, the first light pattern P1 and the second light pattern P2 may be marked as two horizontal lines in the acquired image. In this case, when a distance between the body 10 and the wall is longer than D2, as the first light pattern P1 is marked at the reference position 'ref1' but the second light pattern is marked, the obstacle information obtainer 220 may determine that an obstacle is present.

When the mobile robot approaches the wall such that the distance between the body 10 and the wall is less than D2, the first pattern light is incident on the wall but not the floor, and thus, the first light pattern is marked above the reference position 'ref1' and the second light pattern is marked above the first light pattern in the acquired image. The second light pattern is marked at a lower position as the mobile robot approaches the obstacle, and thus, the second light pattern is marked at a lower position compared with the case in which the distance between the wall and the body 10 is greater than D2. However, the second patter light may be marked above the reference position and the first light pattern.

Accordingly, the obstacle information obtainer 220 may calculate a distance to a wall that is an obstacle through the first light pattern and the second light pattern.

As shown in FIG. 11B, when an obstacle such as a bed or a drawer is present in front of the mobile robot, the first pattern light P1 and the second pattern light P2 may be incident on the floor and the obstacle as two horizontal lines, respectively.

The obstacle information obtainer 220 may determine the obstacle based on the first light pattern and the second light pattern. The height of the obstacle may be determined based on the position of the second light pattern and a change in the second light pattern during approach to the obstacle. Accordingly, the driving controller 230 may determine whether the mobile robot is capable of entering a space below the obstacle and may control the driving driver 300.

For example, when an obstacle with a predetermined space from the floor, e.g., a bed is present in the cleaning area, the driving controller 230 may recognize the space, and in detail, may recognize that a height of the space and may determine whether the mobile robot passes through the obstacle or avoids the obstacle. Upon determining that the height of the space is lower than the height of the body 10, the driving controller 230 may control the driving driver 300 to drive the body 10 to avoid the obstacle. On the other hand, when the height of the space is higher than the height of the body 10, the driving controller 230 may control the driving driver 300 to drive the body 10 to enter the space or to pass through the space.

In this case, in FIG. 11A above, the first light pattern and the second light pattern are marked as two horizontal lines, but the obstacle information obtainer 220 may differentiate the first light pattern and the second light pattern because a distance with the first light pattern and a distance with the second light pattern are different. In FIG. 11A, as the mobile robot approaches the obstacle, the first light pattern is marked above the reference position, but, as shown in FIG. 11B, even if the mobile robot approaches the obstacle positioned at an upper position, the first light pattern P1 is marked at the reference position 'ref1' and a position of the second light pattern P2 is changed, and thus, the obstacle information obtainer 220 may differentiate a type of the obstacle.

As shown in FIG. 11C, in the case of an edge of a bed or a drawer, the first pattern light P1 may be emitted as a horizontal line to the floor, and as the second pattern light P2 may be emitted to an edge of the obstacle, a portion of the second pattern light P2 may be marked as a horizontal line and the other portion may be incident on the obstacle as a diagonal line. The second light pattern is marked upward as the body 10 is positioned farther from the obstacle, and thus, in the case of the second light pattern incident on a side surface of the obstacle, the second light pattern may be marked as a diagonal line bent upward compared with a horizontal line emitted to a front surface of the obstacle.

As shown in FIG. 11D, when the body 10 approaches an edge of a wall by a predetermined distance or greater, a portion of the first pattern light P1 may be marked as a horizontal line above a reference position, may be partially incident on a side surface of the edge to be marked as a diagonal line bent downward, and may be marked as a horizontal line at the reference position with respect to the floor.

As shown in FIG. 11C above, the second pattern light may be partially marked as a horizontal line and may be partially emitted to a side surface of the edge to be marked as a diagonal line bent upward.

As shown in FIG. 11E, with respect to an obstacle protruding from a wall, the first light pattern may be marked as a horizontal line at the reference position 'ref1' , a portion of the second light pattern P2 may be marked as a horizontal line on a protruding surface, another portion of the second light pattern P2 may be emitted to a side surface of the protruding surface to be marked as a diagonal line bent upward, and the other portion of the second light pattern P2 may be emitted to the wall to be marked as a horizontal line.

Accordingly, the obstacle information obtainer 220 may determine a position, a shape, and a size (height) of the obstacle based on the position and the shape of the first pattern light and the second pattern light.

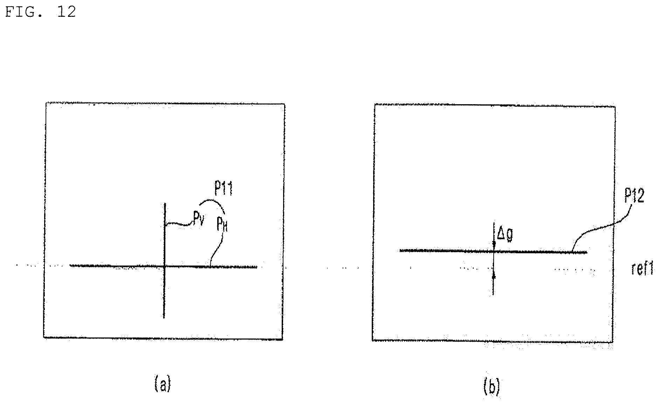

FIG. 12 is a diagram showing pattern light shown in FIG. 1B.

FIG. 12A shows the first light pattern P1 marked in the acquired image and shows the case in which the horizontal line Ph is detected at the reference position ref 1.

As shown in FIG. 12B, when the second light pattern P2 is marked above the reference position ref1 by a distance Δg in the acquired image, this case corresponds to the case in which a vertical emission angle of the second pattern emission unit 130 is smaller than a predetermined value θr, and accordingly, the vertical emission angle of the second pattern emission unit 130 may be adjusted.

However, when Δg is within a predetermined error range, Δg may be stored, and then, when a distance to the obstacle from a position of the second light pattern P2 marked in the acquired image is calculated, the position of the second light pattern P2 may be compensated for using Δg, and thus, the distance to the obstacle may be more accurately calculated.

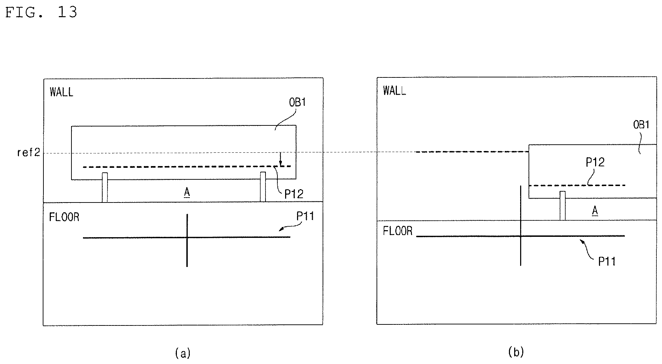

FIG. 13 is a diagram sowing an acquired image depending on a change in a position of the mobile robot shown in FIG. 1B.

FIG. 13A shows in which the acquired image when the mobile robot is positioned at a first position and a first obstacle is positioned in front of the mobile robot and FIG. 13B shows the case in which the acquired image when the mobile robot is changed and is positioned at a second position.

When an obstacle OB1 with a predetermined space A from a floor, e.g., a bed is present in a cleaning area, the space A may be recognized, and in detail, a height of the space A may be recognized and whether the mobile robot passes through the obstacle OB1 or the obstacle OB1 is avoided may be determined.

For example, as shown in FIG. 13A, when the 11^{th} pattern light P11 is incident on a floor in the space A and the 12^{th} pattern light P12 is incident on a structure (e.g., a frame for supporting a bed mattress) positioned below the space A, the obstacle information obtainer 220 included in the controller 200 may recognize that the obstacle is positioned above the portion on which the 11^{th} pattern light P11 is incident, and in particular, may recognize a distance to the obstacle OB1 from the mobile robot 1 based on the 12^{th} light pattern P12 marked in the acquired image, and because a vertical emission angle of the second pattern emission unit 130 is constant, the obstacle information obtainer 220 may recognize a height of a portion on which the second pattern light P2 is incident from the floor in the cleaning area, based on a distance to the obstacle OB1. Accordingly, the obstacle information obtainer 220 may determine the height of the space A based on these information items, and in detail, upon determining that the height of the space A is lower than the height of the body 10, the driving controller 230 may control the driving driver 300 to drive the body 10 to avoid the obstacle OB1. On the other hand, upon determining that the height of the space A is higher than the height of the body 10, the driving controller 230 may also control the driving driver 300 to enter the space A or to pass through the space A.

As shown in FIG. 13B, when the vertical line Pv of the 11^{th} pattern light P11 reaches a wall, the horizontal line Ph is incident on a floor, the 12^{th} light pattern P12 is partially incident on the obstacle OB1, and a portion of the second pattern light P2 is incident on the obstacle OB1 and another portion of the second pattern light P2 is incident on the wall, without the second pattern emission unit 130, obstacle information may be acquired based on only the 11^{th} pattern light P11 marked in the acquired image, and thus, in this case, only the fact that a wall is present in front of the mobile robot may be recognized, but like in the embodiment, when the second pattern emission unit 130 is present, the fact that the obstacle OB1 is present between the mobile robot 1 and the wall may be further recognized, and in particular, it may be possible to detect the obstacle OB1 in a wider area in a horizontal direction using the 12^{th} light pattern P12 configured to include the horizontal line Ph, and thus, it may be possible to also detect the obstacle OB1 positioned in a region to which the vertical line Pv of the 11^{th} pattern light P11 is not reached.

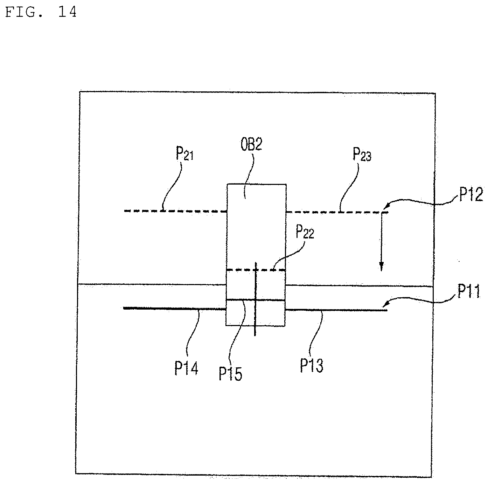

FIG. 14 is a diagram showing an acquired image of pattern light emitted to an obstacle of the mobile robot shown in FIG. 1B.

Referring to FIG. 14, the mobile robot 1 according to an exemplary embodiment of the present invention may recognize a three-dimensional shape of an obstacle through the 12^{th} light pattern P12 in addition to obstacle information recognizable through the 11^{th} pattern light P11. For example, an actual height of the obstacle OB2 is not capable of being overcome through driving of the mobile robot 1, but the 11^{th} pattern light P11 is incident on a lower region of the obstacle at a current position of the mobile robot 1, and thus, without the second pattern emission unit 130, the driving controller 230 may determine that the body 10 is capable of going over the obstacle OB2 and may control the body 10 to drive toward the obstacle OB2, and then, as the body 10 approaches the obstacle OB2, a position of the 12^{th} light pattern P12 may be gradually raised on the acquired image, and upon determining that a height of the obstacle OB2 is capable of being overcome by the body 10, the driving controller 230 may control the driving driver 300 to drive to avoid the obstacle OB2.

- On the other hand, according to the exemplary embodiment, when the second pattern emission unit 130 is used, the 12^{th} light pattern P12 is incident on the obstacle OB2 at a current position, and thus, a height of the obstacle OB2 may be pre-recognized, and a driving path may be more previously optimized to correspond to the recognized height.

The obstacle information obtainer 220 may recognize a cliff positioned in front of the mobile robot 1 based on a length of the vertical line Pv marked in the acquired image. When a cliff (e.g., stair) is present in front of the mobile robot 1, a front end portion of the vertical line Pv is reached to a lower portion of the cliff and a portion emitted to the lower portion of the cliff is not marked in the acquired image, and thus, the length of the vertical line Pv shown in the acquired image may be reduced. Accordingly, when the length of the vertical line Pv is reduced, the obstacle information obtainer 220 may recognize that the cliff is present in front of the mobile robot 1 and may control the driving driver 300 to drive the mobile robot 1 to drive along a path not to fall off the cliff based on the recognized cliff information. In addition, when a portion (P13 to P15) of the horizontal line Ph is not marked in the acquired image, the obstacle information obtainer 220 may recognize that the cliff is present on the left or right of the body.

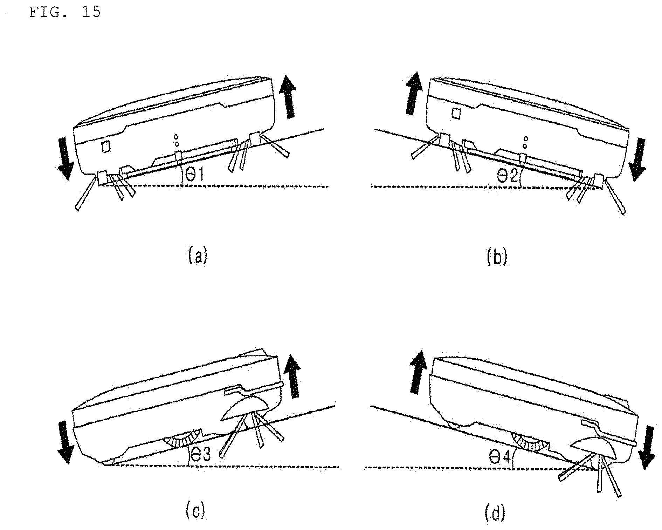

FIG. 15 is a diagram for explanation of inclination of a body of a mobile robot according to an exemplary embodiment of the present invention.

As shown in FIGS. 15A and 15B, the mobile robot 1 may be inclined to the left or right due to an obstacle with a predetermined size or less, such as a threshold or a fan. That is, when a left wheel or a right wheel goes up a threshold or a fan, one side of the body may be lifted by as much as a height of an obstacle and the body may be inclined, as shown in the drawing.

As shown in FIGS. 15C and 15D, a front or rear side of the body 10 may be lifted and the body 10 may be inclined.

For example, when the body 10 goes over a threshold, a front side of the body 10 may be lifted as going up the threshold as shown in FIG. 15C while the body 10 goes over the threshold, and a rear side of the body 10 may be lifted as going down the threshold as shown in FIG. 15D while the body 10 goes over and down the threshold.

The sensor unit 150 may detect an inclination direction and an inclination angle, i.e., a first inclination 81 to a fourth inclination Θ4 and may input the detected information to the controller 200.

The controller 200 may determine inclination of the body 10 according to a detection signal input from the sensor unit 150 and may perform inclination compensation with respect to a light pattern of the acquired image based on the inclination direction and the inclination angle.

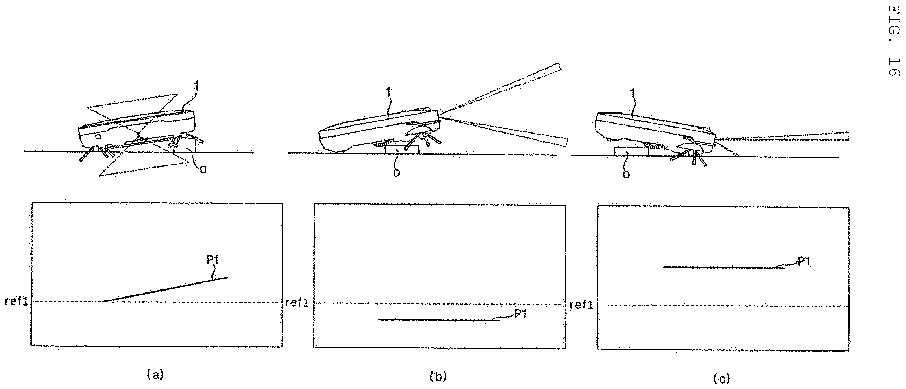

FIG. 16 is a diagram showing an example of a pattern based on inclination of the mobile robot of FIG. 15.

As shown in FIG. 16A, when the body 10 is inclined to the left or right by an obstacle O, the light pattern P1 marked in the acquired image may also be marked to be inclined at a predetermined angle.

Upon determining the light pattern P1, the controller 200 may perform inclination compensation with respect to the light pattern based on the inclination direction and the inclination angle of the body 10 from the detection signal input from the sensor unit 150.

When the left wheel goes up the obstacle O and the body 10 is inclined, the obstacle information obtainer 220 may determine that the light pattern in the acquired image is caused due to the inclination of the body 10. The obstacle information obtainer 220 may compensate for the light pattern based on the inclination direction and angle, may re-determine the obstacle positioned in front of the body 10, and may apply obstacle information to the driving controller. Accordingly, the driving controller may set whether the mobile robot is continuously driven to pass the obstacle or is driven to avoid the obstacle and may control driving according to the obstacle.

As shown in FIG. 16B, when the mobile robot 1 goes over and pass the obstacle O, the light pattern P1 in the acquired image may be marked below the reference position 'ref1', for example, while the mobile robot 1 goes up a threshold. As necessary, when a height of a threshold is great, a light pattern may not be marked in the acquired image.

When a light pattern is marked below the reference position 'ref1' or is not marked in the acquired image, the obstacle information obtainer 220 may determine a cliff. However, upon determining that the body 10 is inclined according to the detection signal input from the sensor unit 150, the obstacle information obtainer 220 may re-determine that an obstacle is not a cliff. In this case, the obstacle information obtainer 220 may perform inclination compensation with respect to a light pattern and control driving depending on the inclination direction and angle. The controller 200 may determine the size and height of the obstacle prior to entrance into a threshold that is an obstacle, and thus, may determine that the obstacle is not a cliff based on the pre-determined obstacle information.

As shown in FIG. 16C, when the mobile robot 1 goes down the obstacle O, the mobile robot 1 is inclined forward, and thus, the light pattern P1 may be marked above the reference position 'ref1' in the acquired image.

The obstacle information obtainer 220 may determine that an obstacle is positioned in front of the mobile robot 1 according to a position of a light pattern. In this case, upon determining that the body 10 is inclined forward based on the detection signal of the sensor unit 150, the obstacle information obtainer 220 may compensate for the light pattern based on the inclination angle and may re-determine whether an obstacle is present. Since a distance by which light is reached is different based on an inclination degree, the controller 200 may compensate for the light pattern depending on an inclination angle to determine whether the obstacle is present when the body is inclined, and the main controller may control driving according to whether the obstacle is present.

In this case, when an inclination angle is greater than a predetermined angle, the obstacle information obtainer 220 may consider exception, may disregard a light pattern, and may determine that the obstacle is not present while the body passes the obstacle. Accordingly, the obstacle is not present, and thus, the driving controller may control the body to continuously drive. For example, in the case of a threshold, if inclination of the body 10 is greater than a predetermined angle, the mobile robot may be moved backward to avoid the threshold, but after going up the threshold, the mobile robot needs to pass the threshold, and thus, the obstacle information obtainer 220 may disregard determination about an obstacle based on the light pattern and may determine that that is no obstacle. Accordingly, the driving controller may control the driving driver 300 to continuously drive.

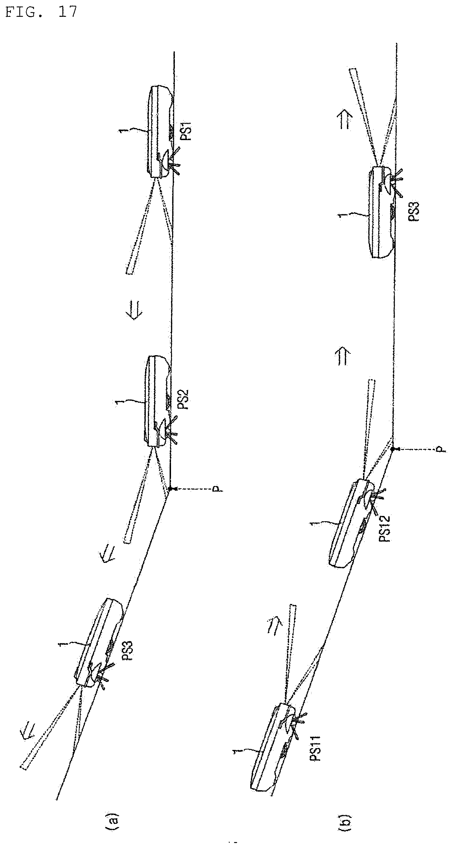

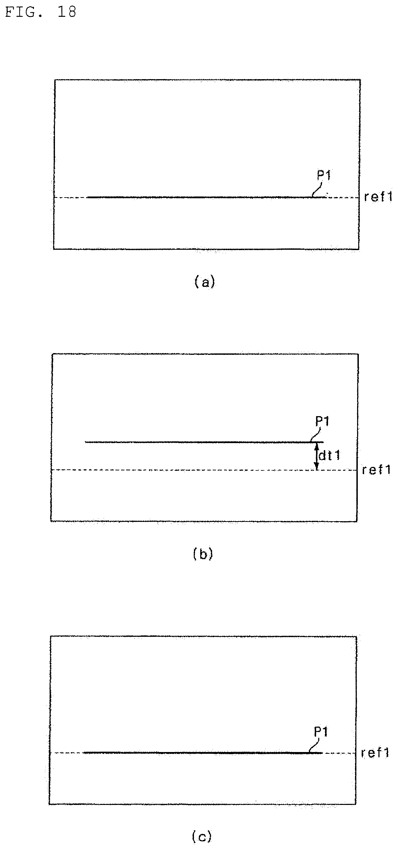

FIG. 17 is a diagram showing an example of entrance into a slope way of a mobile robot according to an exemplary embodiment of the present invention. FIG. 18 is a diagram showing a change in pattern along with entrance into a slope way of the mobile robot of FIG. 17.

As shown in FIG. 17, the mobile robot 1 may enter a slope way and may drive the slope way.

In this case, before the mobile robot 1 enters the slope way, it may be determined that the slope way is an obstacle via analyze of a light pattern of an acquired image due to an inclination angle of the slope way. The obstacle information obtainer 220 may analyze the light pattern of the acquired image to determine an inclination angle and may determine whether the mobile robot 1 enters the slope way.

The obstacle information obtainer 220 may determine that the obstacle is present when the inclination angle is equal to or greater than a predetermined angle, and accordingly, the driving controller may determine that mobile robot is not capable of entering the obstacle and may control the mobile robot to drive to avoid the obstacle. When the inclination angle is less than the predetermined angle, the obstacle information obtainer 220 may determine that the obstacle is not present, and the driving controller may determine that the mobile robot is capable of entering the obstacle and may control the mobile robot to continuously drive. The obstacle information obtainer 220 may determine whether the mobile robot 1 enters a downhill slope as well as an uphill slope. Hereinafter, the case in which the mobile robot drives a slop way that the mobile robot is capable of entering is described, and in this case, an inclination angle at which the mobile robot is capable of entering may be different for each mobile robot. In addition, it may be noted that an inclination angle is illustrated to be equal to or greater than a predetermined angle to understand a change in a light pattern along with a change in inclination angle.

As shown in FIG. 17A, while driving on a flat land PS1, the mobile robot 1 may enter an uphill slope PS3 through a boundary point P. Before the mobile robot 1 enters the slope way (PS2), an inclination angle between the flat land the slope way is present at the boundary point P, and thus, an obstacle is not present in front of the mobile robot 1, and even if pattern light is incident on the floor, the slope way may be determined as the obstacle.

When the mobile robot 1 is driven on a flat land, the first light pattern P1 may be marked at the reference position 'ref1' , as shown in FIG. 18A.

When the mobile robot 1 approaches the slope way, the first light pattern P1 may be marked above the reference position 'ref1' in the reference position 'ref1' , as shown in FIG. 18B.

The obstacle information obtainer 220 may approach the boundary point and may determine the slope way through a change in the first light pattern P1. When the mobile robot 1 drives the same distance, since a position at which the first light pattern is marked with respect to the obstacle and a position in which the first light pattern is marked in the slope way, the obstacle information obtainer 220 may determine an inclination angle of the slope way. As the light pattern is marked above the reference position by dt1 to correspond to the inclination angle of the slope way, the obstacle information obtainer 220 may compensate for this and may re-determine the obstacle.

Upon determining that the mobile robot is capable of driving though determination of an inclination angle or an obstacle, the driving controller 230 may control the driving driver 300 to drive the mobile robot to enter the slope way. When the mobile robot 1 enters the slope way through the boundary point, the mobile robot may be inclined, but the first light pattern may be marked at the reference position 'ref1' on the slope way and may be in a normal state, as shown in FIG. 18C.

Upon determining that the body 10 is inclined according to a detection signal input from the sensor unit 150, the obstacle information obtainer 220 may determine whether the inclination is compensated for in the case of the obstacle is detected.

As shown in FIG. 17B, the mobile robot 1 may drive the downhill slope (PS11) and may enter the flat land (PS13). In this case, the light pattern marked in the acquired image may be marked in the same way as in FIGS. 18A to 18C in which the mobile robot enters a slope way.

Before the mobile robot 1 reaches the boundary point P (PS12), as an inclination angle at the boundary point is changed, the mobile robot 1 may determine the obstacle even if the obstacle is not present in front of the mobile robot 1 and pattern light is incident on the floor.

As the first light pattern P1 is marked above the reference position 'ref1' in the acquired image input through the obstacle detection unit 100 as shown in FIG. 18B, the controller 200 may determine the obstacle.

The obstacle information obtainer 220 may determine that the body 10 is inclined according to the detection signal input from the sensor unit 150, an accordingly, may perform inclination compensation with respect to the light pattern.

As the light pattern is marked above the reference position by dt1 to correspond to an angle at which the body is inclined, the obstacle information obtainer 220 may perform inclination compensation and may re-determine the obstacle.

As the inclination angle is changed at the boundary point P, the obstacle information obtainer 220 may re-determine that an obstacle is not present by compensating for the inclination with respect to a portion recognized as the obstacle even if the obstacle is not present. Accordingly, the driving controller 230 may control the driving driver 300 to continuously drive the body 10.

When the body 10 enters a flat land through the boundary point, the obstacle information obtainer 220 may determine that the body 10 enters the flat land through a detection signal of the sensor unit 150 and may not perform inclination compensation with respect to an obstacle that is detected in the future. The first light pattern may be marked as a normal state in the acquired image.

When the body 10 is inclined, even if the controller 200 determines an obstacle after inclination of the body is greater than a predetermined angle or is compensated for, the controller 200 may disregard detection of the obstacle based on the light pattern and the mobile robot may continuously drive. That is, to recover back to a normal state from a state in which the body 10 is inclined, the obstacle information obtainer 220 may disregard determination of the obstacle based on the light pattern. In the case of FIG. 17A above, when the inclination angle is greater than a predetermined angle, the mobile robot 1 may determine an obstacle and may not enter the obstacle, if the mobile robot 1 is positioned on a slope way and the body 10 is inclined, the mobile robot 1 may be driven to avoid the state in which the body is inclined.

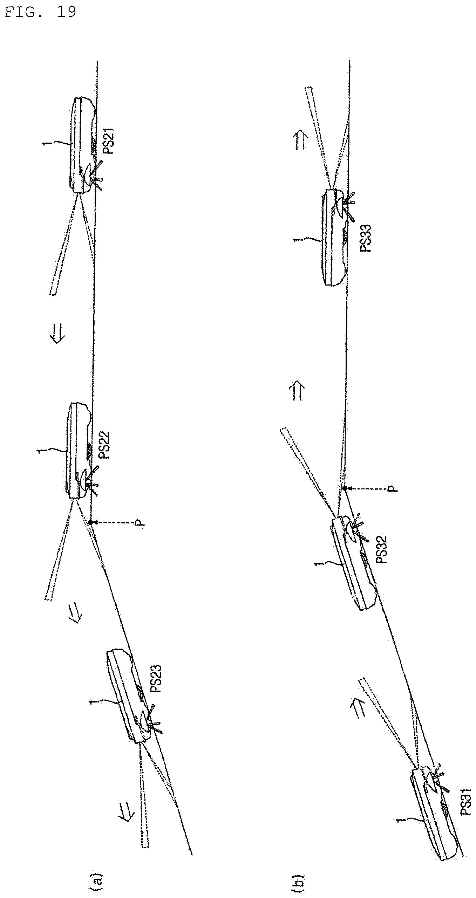

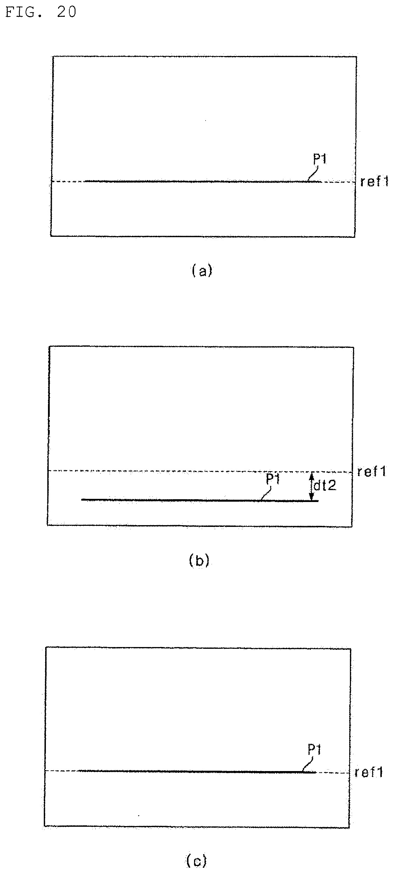

FIG. 19 is a diagram showing another example of entrance into a slope way of a mobile robot according to an exemplary embodiment of the present invention. FIG. 20 is a diagram showing a change in pattern along with entrance into a slop way of the mobile robot of FIG. 19.

As shown in FIG. 19, while driving on a flat land (PS21), the mobile robot 1 may enter a downhill slope through the boundary point P (PS23).

Before the mobile robot 1 enters a downhill slope (PS22), as an inclination angle between the float land the slope way at the boundary point P is formed, the mobile robot 1 may determine the slope way as an obstacle, that is, a slip even if the obstacle is not present in front of the mobile robot 1 and pattern light is inclined on the floor.

In this case, as shown in FIG. 20A, a first light pattern is marked at the reference position 'ref1' in the acquired image on the flat land (PS22), and thus, the obstacle information obtainer 220 may determine the first light pattern to be in a normal state.

Prior to entrance into the downhill slope (PS22), the first light pattern P1 may be marked below the reference position 'ref1' by dt2 in the acquired image, as shown in FIG. 20B. In addition, the first light pattern may not be marked in the acquired image.

The obstacle information obtainer 220 may primarily determine a downhill slope as a cliff based on the light pattern of the acquired image, and then, may determine the downhill slope based on a change in position of the first light pattern during approach. The obstacle information obtainer 220 may further determine whether a cliff is present through a separately included cliff sensor.

When a downhill inclination angle is equal to or greater than a predetermined angle, the driving controller 230 may recognize a cliff and the mobile robot may drive to avoid the cliff, and when the inclination angle is less than a predetermined angle, the driving controller 230 may determine that the mobile robot is capable of being driven and the mobile robot may continuously drive. In this case, when an inclination angle is less than a predetermined angle, the obstacle information obtainer 220 may compensate for a position of a light pattern by dt2 to correspond to the inclination angle and may re-determine the obstacle. The controller 200 may compensate for a position change depending on the inclination angle to determine that the mobile robot is capable of being driven and may apply a driving command to the driving driver 300.

After the mobile robot 1 enters a downhill slope (PS23), the sensor unit 150 may detect inclination of the body 10 and may input the detected information to the controller 200. As shown in FIG. 20C, a first light pattern is marked at a reference position in the acquired image, and thus, the obstacle information obtainer 220 may determine the first light pattern to be in a normal state.

As shown in FIG. 19B, the mobile robot 1 may drive on a downhill slope (PS31) and may enter a flat land (PS33). In this case, a change in light pattern of the acquired image is shown in FIGS. 20A to 20C.

When the mobile robot 1 approaches the boundary point P (PS32), as an inclination angle is changed, the first light pattern is marked below the reference position by dt2 in the acquired image, as shown in FIG. 20B.

The obstacle information obtainer 220 may determine that the body is inclined and may performed inclination with respect to a light pattern according to the detection signal input from the sensor unit 150. Accordingly, the obstacle information obtainer 220 may re-determine the obstacle based on the compensated light pattern and the driving controller may determine whether the mobile robot is capable of being driven based on information on the re-determined obstacle.

When the mobile robot enters a flat land, the acquire image may be marked as a normal state in the acquired image as shown in FIG. 20C. The obstacle information obtainer 220 may determine that the mobile robot enters the flat land and may not perform inclination compensation according to the detection signal of the sensor unit 150.

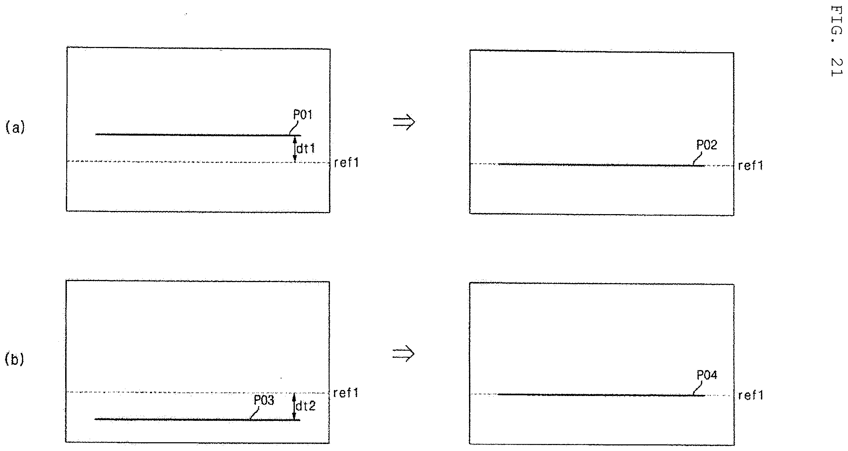

FIG. 21 is a diagram showing an example of inclination compensation of a mobile robot according to an exemplary embodiment of the present invention.

As shown in FIG. 21, the controller 200 may perform inclination compensation with respect to a light pattern of an acquired image based on the detection signal of the sensor unit 150.

As shown in FIG. 21A, when the body 10 is inclined forward, the first light pattern P1 may be marked above the reference position 'ref1' by dt1 depending on an inclination angle in the acquired image. The obstacle information obtainer 220 may change a position of the first light pattern by dt1 to correspond to the inclination angle and may perform compensation. Accordingly, the obstacle information obtainer 220 may determine that the first light pattern is in a normal state and the driving controller 230 may control the driving driver 300 to continuously drive the mobile robot.

When the body 10 is inclined backward, the first light pattern P1 may be marked below the reference position 'ref1' by dt2 depending on an inclination angle, as shown in FIG. 21B. The obstacle information obtainer 220 may compensate for a position of the first light pattern by dt2 to correspond to an inclination angle based on the detection signal of the sensor unit 150. Through inclination compensation, the first light pattern of the acquired image is marked at a reference position, and thus, the obstacle information obtainer 220 may determine the first light pattern to be in a normal state.

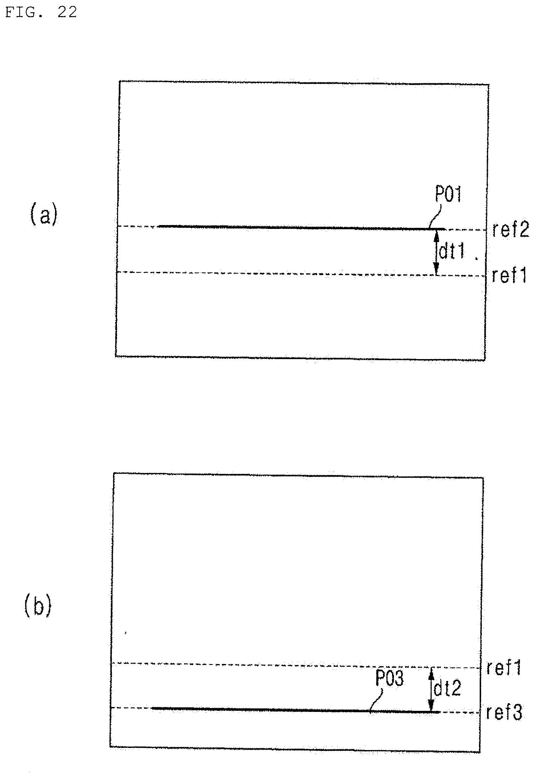

FIG. 22 is a diagram showing another example of inclination compensation of a mobile robot according to an exemplary embodiment of the present invention.

As shown in FIG. 22, the controller 200 may change a reference position according to inclination and may perform inclination compensation.

As shown in FIGS. 22A and 22B, the obstacle information obtainer 220 may set a second reference position ref2 or a third reference position ref3 and may perform inclination compensation to determine an obstacle in response to an inclination angle input from the sensor unit 150.

When the body 10 is inclined forward, the first light pattern P1 may be marked above the reference position 'ref1' by dt1 depending on the inclination angle in the acquired image, and in this case, the obstacle information obtainer 220 may determine the first light pattern based on the second reference position ref2 but not the reference position 'ref1' and may determine the obstacle positioned in front of the mobile robot depending on the inclination angle.

When the body 10 is inclined backward, if the first light pattern is marked below the reference position by dt2, the obstacle information obtainer 220 may also determine the first light pattern based on the third reference position ref3 to determine the obstacle positioned in front of the mobile robot depending on the inclination angle.

The obstacle information obtainer 220 may perform comparison on the first light pattern based on the second or third reference position to determine the first light pattern to be in a normal state.

Accordingly, the mobile robot 1 may not recognize the floor as an obstacle and may drive due to change in inclination.

When the obstacle information obtainer 220 compensates for the first light pattern depending on an inclination angle or the first light pattern is not in a normal state even after the reference position is changed and compensated for, the obstacle information obtainer 220 may determine that an obstacle is present and the driving controller 230 may control the driving driver 300 to avoid the obstacle.

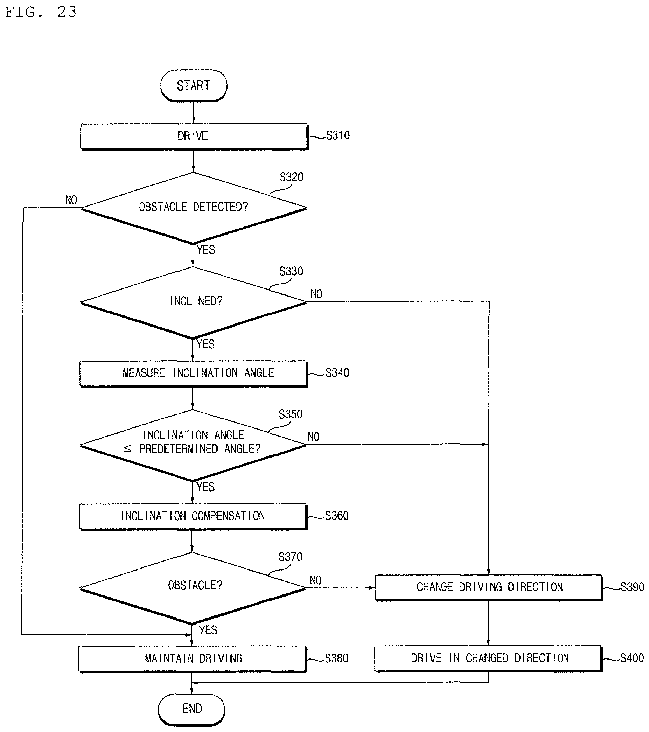

FIG. 23 is a flowchart showing a control method of compensating for inclination of a mobile robot according to an exemplary embodiment of the present invention.

As shown in FIG. 23, while the mobile robot 1 is driven (S310), the mobile robot 1 may extract a pattern from an acquired image input from the obstacle detection unit 100 and may detect an obstacle. The pattern detector 210 may extract a pattern of the acquired image, and the obstacle information obtainer 220 may compare the extracted pattern, that is, a light pattern with a reference position and may determine an obstacle positioned in front of the mobile robot according to whether the position of the light pattern is a reference position (S320).

When the light pattern is positioned above the reference position, the obstacle information obtainer 220 of the controller 200 may determine that an obstacle is present in a driving direction and may determine that a cliff is present when the light pattern is marked below the reference position.

The controller 200 may determine whether the body 10 is inclined according to the detection signal input from the sensor unit 150 (S330).

For example, as described above with reference to FIGS. 15 and 16, when the body 10 is inclined in any one of left, right, up, and down directions of the body 10, the controller 200 is capable of determining that the obstacle is positioned even if the obstacle is not present, and thus, the controller 200 may determine whether the body is inclined.

When the body 10 is inclined, the obstacle information obtainer 220 may calculate an inclination angle of the body according to the detection signal (S340) and may determine whether the inclination angle is equal to or less than a predetermined angle (S350).

When the body 10 is inclined at a predetermined angle or less, the obstacle information obtainer 220 may perform inclination compensation with respect to a light pattern of the acquired image (S360). The obstacle information obtainer 220 may change a position of the light pattern depending on the inclination or may change the reference position to perform inclination compensation.

After compensating for the inclination, the obstacle information obtainer 220 may compare the light pattern with the reference position to re-determine whether the obstacle is present (S370).

The obstacle information obtainer 220 may determine that a current state is a normal state when a light pattern is positioned at a reference position through inclination compensation, and accordingly, the driving controller 230 may maintain driving (S380).

After inclination compensating is performed, when the light pattern is positioned above the reference position, the obstacle information obtainer 220 may determine that the an obstacle is present in a driving direction, and when the light pattern is marked below the reference position, the obstacle information obtainer 220 may determine that a cliff is present. Accordingly, the driving controller 230 may change a driving direction to avoid the obstacle (S390). The driving controller 230 may control the driving driver 300 to avoid the obstacle and to drive the mobile robot in the changed direction, and the mobile robot 1 may be driven in the changed direction (S400).

However, when the body 10 is inclined forward and there is no cliff, the obstacle information obtainer 220 may disregard determination of the obstacle based on the light pattern and may determine that the obstacle is not present. The driving controller 230 may control the driving driver to continuously drive the mobile robot. In the aforementioned situation shown in FIG. 16C, the mobile robot may disregard the obstacle and may continuously drive to avoid an inclined state.

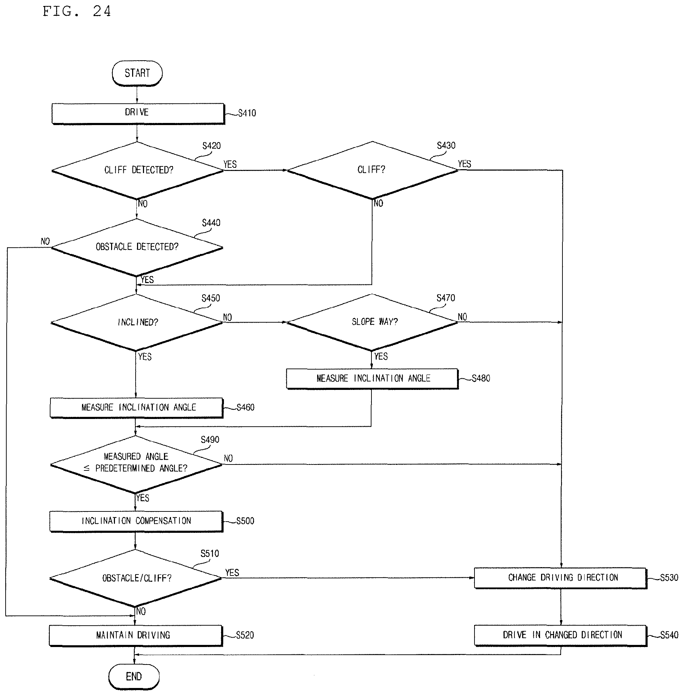

FIG. 24 is a flowchart showing a driving method using inclination compensation of a mobile robot according to an exemplary embodiment of the present invention.

AS shown in FIG. 24, while the mobile robot 1 is driven in a predetermined direction (S410), if an obstacle is detected through the obstacle detection unit 100 (S420), the obstacle information obtainer 220 may determine the position and size of the obstacle to correspond to a light pattern of the acquired image, as described above. The obstacle information obtainer 220 may determine that there is no obstacle in a driving direction when the light pattern is marked at a reference position, that is, is in a normal stated. Accordingly, the driving controller 230 may maintain predetermined driving (S520).

When the detected obstacle is a cliff, the driving controller 230 may re-check whether the cliff is present through a cliff sensor after the mobile robot approaches to the obstacle, that is, the cliff at a predetermine distance( S430).

In the case of the cliff, the driving controller 230 may change a driving direction to prevent the mobile robot not to fall off the cliff (S530) and may control the driving driver 300 to drive the mobile robot in the changed direction (S540).

When there is no cliff, the controller 200 may determine whether the body 10 is inclined according to the detection signal input from the sensor unit 150 (S450).

When the body is not inclined, the obstacle information obtainer 220 may determine whether an obstacle positioned in front of the mobile robot is a slope way (S470). As described above, in the case of an uphill slope, when a light pattern of the acquired image is marked above the reference position, and in the case of a downhill slope, the light pattern of the acquired image is marked below the reference position, and thus, the obstacle information obtainer 220 may determine that obstacle is present.

Accordingly, as the mobile robot is driven forward by a predetermined distance, the obstacle information obtainer 220 may determine a change in a position of the light pattern, and may compare the position change with the case in which the obstacle is present to determine whether the obstacle is a slop way.

In the case of a slop way, the obstacle information obtainer 220 may calculate an inclination angle based on the position change of the light pattern (S480). In this case, when the obstacle is not a slope way, the obstacle information obtainer 220 may determine that the obstacle is present. The driving controller 230 may change a driving direction to avoid the obstacle (S530) and may control the driving driver 300 to drive the mobile robot in the changed direction (S540).

When the body 10 is inclined, the obstacle information obtainer 220 may calculate an inclination angle according to the detection signal (S460) and may determine whether the inclination angle is equal to or less than a predetermined angle (S490). The obstacle information obtainer 220 may determine whether the inclination angle is equal to or less than a predetermined angle with respect to the inclination angle of a slope way positioned in front of the mobile robot.

When the inclination angle of the body is greater than a predetermined angle, the obstacle information obtainer 220 may determine that the obstacle is present. The driving controller 230 may change a driving direction not to enter the slope way (S530) and may control the driving driver 300 to drive the mobile robot to drive in the changed direction (S540).

When the inclination angle is greater than a predetermined angle, the driving controller 230 may change the driving direction (S530) and may control the driving driver 300 to drive the mobile robot to drive in the changed direction (S540). In this case, the driving controller 230 may drive the mobile robot backward such that inclination of the body 10 is in a normal state.

Exceptionally, when the body 10 is inclined forward and there is no cliff, even if an inclination angle is greater than a predetermined angle, the obstacle information obtainer 220 may disregard determination of an obstacle based on a light pattern and may determine that an obstacle is not present. Accordingly, the driving controller 230 may control the body 10 to continuously drive. For example, in the aforementioned situation shown in FIG. 16C, an obstacle detected based on the light pattern may be disregarded and the mobile robot may be continuously driven, and thus, the mobile robot may be avoided to be inclined.

When inclination of the body is equal to or less than a predetermined angle or the inclination angle is equal to or less than a predetermined angle, the obstacle information obtainer 220 may perform inclination compensation to correspond to an angle of the inclination of the body or the inclination angle (S500). The obstacle information obtainer 220 may change a position of a light pattern by a predetermined value or may change a reference position to perform inclination compensation to correspond to the inclination of the body or the inclination angle.

After compensating for the inclination, the obstacle information obtainer 220 may compare a position of a light pattern with a reference position to re-determine whether an obstacle is present (S510).

When the light pattern is positioned at a reference position, the obstacle information obtainer 220 may determine the light pattern to be in a normal state after compensating for the inclination, and thus, the light pattern is in a normal state, the driving controller 230 may maintain the body 10 to drive (S520).

Accordingly, even if an obstacle is not present and a light pattern is not in a normal state, because the body 10 is inclined, the mobile robot may drive through inclination compensation. When a slope way is recognized as an obstacle, if the inclination angle is equal to or less than a predetermined angle, the mobile robot may continuously driven to enter the slope way.

When the light pattern is not positioned at a reference position, the obstacle information obtainer 220 may determine an obstacle or a cliff after inclination compensation. The driving controller 230 may change a driving direction to avoid an obstacle (S530) and may control the driving driver 300 to drive the mobile robot to drive in the changed direction (S540).

Accordingly, according to the present invention, when the mobile robot 1 determines an obstacle using a light pattern, the mobile robot 1 may determine inclination of a body or whether a slope way is present to perform inclination compensation, and thus, even if the obstacle is not present, determination of an obstacle may be prevented, and the mobile robot may be continuously driven. Accordingly, an area that the mobile robot does not approach due to wrong determination of an obstacle may be reduced, and thus, the mobile robot may enter various areas and a cleaning area may be enlarged.

Although the exemplary embodiments of the present invention have been disclosed for illustrative purposes, those skilled in the art will appreciate that various modifications, additions and substitutions are possible, without departing from the scope of the invention as disclosed in the accompanying claims.

## Claims

1. A mobile robot comprising:
a body (10) driven in a cleaning area;
a sensor unit (150) for detecting inclination of the body and inputting a detection signal;
a first pattern emission unit (120) disposed on a front surface of the body and for emitting first pattern light toward a lower side of a front side of the body;
a second pattern emission unit (130) disposed on the front surface of the body, disposed below the first pattern emission unit, and for emitting second pattern light toward an upper side of the front side of the body;
an image acquirer (140) disposed on the front surface of the body and for acquiring an image of the front side of the body; and
a controller (200) for detecting a first light pattern corresponding to the first pattern light and a second light pattern corresponding to the second pattern light from the acquired image input from the image acquirer, determining an obstacle, and performing control to pass or avoid the obstacle,
wherein the controller (200) determines whether the body is inclined based on the detection signal input from the sensor unit, and when the body is inclined, the controller re-determines whether the obstacle is present through inclination compensation with respect to the first light pattern depending on the inclination of the body,
**characterized in that** the body is suitable for absorbing foreign substances on a floor in the cleaning area,
wherein the controller (200) adjusts a position of the first light pattern to perform inclination compensation to correspond to an inclination angle of the body (10), or the controller (200) changes a reference position with respect to the first light pattern to perform inclination compensation to correspond to an inclination angle of the body (10).

2. The mobile robot of claim 1, wherein:
the controller (200) performs inclination compensation, and then, when the first light pattern is marked at a reference position, the controller (200) determines a normal state in which an obstacle is not present in front of the mobile robot and controls the mobile robot to be continuously driven; and
when the first light pattern is not marked at the reference position, the controller (200) determines the obstacle and controls the mobile robot to be driven to avoid the obstacle.

3. The mobile robot of claim 1, wherein:
when the inclination of the body (10) is equal to or less than a predetermined angle, the controller (200) re-determines whether the obstacle is present through inclination compensation and controls driving of the mobile robot; and
when the inclination of the body (10) is greater than the predetermined angle, the controller disregards determination of the obstacle based on the first light pattern and controls the mobile robot to be continuously driven to avoid a state in which the body (10) is inclined.

4. The mobile robot of claim 3, wherein, when the inclination of the body (10) is greater than the predetermined angle and the obstacle is not a cliff, the controller (200) disregards determination of the obstacle based on the first light pattern.

5. The mobile robot of claim 1, wherein:
when the body is not inclined, the controller determines whether the obstacle is a slope way;
when an inclination angle of the slope way is equal to or less than a predetermined angle, the controller performs inclination compensation depending on the inclination angle and controls entrance into the slope way; and
when the inclination angle is greater than the predetermined angle, the controller controls the mobile robot to avoid the slope way.

6. The mobile robot of claim 1, wherein the sensor unit (150) includes at least one inclination sensor for measuring an inclination direction of left, right, up, and down directions and the inclination angle of the body,
the inclination sensor (150) includes at least one of a tilt sensor and an acceleration sensor.

7. The mobile robot of claim 1, wherein:
the first pattern emission unit (120), the second pattern emission unit (130), and the image acquirer (140) are disposed in a line;
the image acquirer (140) is disposed below the second pattern emission unit, and
the first pattern emission unit (120) and the second pattern emission unit (130) are disposed to be symmetrical with each other.

8. A method of controlling a mobile robot, the method comprising:
emitting first pattern light and second pattern light and driving the mobile robot while capturing an image positioned in front of the mobile robot;
sensing a first light pattern corresponding to the first pattern light and a second light pattern corresponding to the second pattern light from the captured acquired image to detect an obstacle;
detecting inclination of a body (10) of the mobile robot;
when the body (10) is inclined, performing inclination compensation on the first light pattern or the second light pattern depending on the inclination; and
after the inclination compensation is performed, re-determining the obstacle and driving the mobile robot to pass or avoid the obstacle,
**characterized in that** the performing of the inclination compensation includes adjusting a position of the first light pattern to perform the inclination compensation to correspond to an inclination angle of the body (10), or changing a reference position with respect to the first light pattern to perform the inclination compensation to correspond to an inclination angle of the body (10).

9. The method of claim 8, wherein the re-determining of the obstacle includes:
after the inclination compensation is performed, when the first light pattern is in a normal state, determining that the obstacle is not present and maintaining driving of the mobile robot; and
when the first light pattern is not in a normal state, determining the obstacle and driving the mobile robot to avoid the obstacle.

10. The method of claim 8, further comprising:
when the inclination of the body (10) is equal to or less than a predetermined angle, re-determining whether the obstacle is present through inclination compensation and driving the mobile robot; and
when the inclination of the body (10) is greater than the predetermined angle, disregarding determination of the obstacle based on the first light pattern and continuously driving the mobile robot to recover to a normal state from a state in which the body (10) is inclined, wherein, when the inclination of the body (10) is greater than a predetermined angle and the obstacle is not a cliff, the determination of the obstacle based on the first light pattern is disregarded.

11. The method of claim 8, further comprising:
when the body is not inclined, determining whether the obstacle is a slope way;
when an inclination angle of the slope way is equal to or less than a predetermined angle, performing inclination compensation depending on the inclination to enter the slope way; and
when the inclination angle is greater than the predetermined angle, driving the mobile robot to avoid the slope way.

## Patentansprüche

1. Mobiler Roboter, der aufweist:
einen Körper (10), der in einem Reinigungsbereich gefahren wird;
eine Sensoreinheit (150) zum Erfassen der Neigung des Körpers und zum Eingeben eines Erfassungssignals;
eine erste Musteremissionseinheit (120), die auf einer vorderen Oberfläche des Körpers angeordnet ist und zum Emittieren eines ersten Musterlichts zu einer unteren Seite einer Vorderseite des Körpers dient;
eine zweite Musteremissionseinheit (130), die auf der vorderen Oberfläche des Körpers unter der ersten Musteremissionseinheit angeordnet ist und zum Emittieren eines zweiten Musterlichts zu einer oberen Seite der Vorderseite des Körpers dient;
eine Bildaufnahmeeinrichtung (140), die auf der Vorderseite des Körpers angeordnet ist und zum Aufnehmen eines Bildes der Vorderseite des Körpers dient; und
eine Steuerung (200) zum Erfassen eines ersten Lichtmusters, das dem ersten Musterlicht entspricht, und eines zweiten Lichtmusters, das dem zweiten Musterlicht entspricht, aus dem aufgenommenen Bild, das von der Bildaufnahmeeinrichtung eingegeben wird, zum Bestimmen eines Hindernisses und zum Durchführen einer Steuerung, um das Hindernis zu passieren oder zu vermeiden,
wobei die Steuerung (200) basierend auf dem von der Sensoreinheit eingegebenen Erfassungssignal bestimmt, ob der Körper geneigt ist, und wenn der Körper geneigt ist, die Steuerung erneut bestimmt, ob das Hindernis vorhanden ist, durch eine Neigungskompensation in Bezug auf das erste Lichtmuster in Abhängigkeit von der Neigung des Körpers,
**dadurch gekennzeichnet, dass** der Körper geeignet ist, Fremdstoffe auf einem Boden im Reinigungsbereich aufzunehmen,
wobei die Steuerung (200) eine Position des ersten Lichtmusters einstellt, um eine Neigungskompensation durchzuführen, so dass sie einem Neigungswinkel des Körpers (10) entspricht, oder die Steuerung (200) eine Referenzposition in Bezug auf das erste Lichtmuster ändert, um eine Neigungskompensation durchzuführen, so dass sie einem Neigungswinkel des Körpers (10) entspricht.

2. Mobiler Roboter nach Anspruch 1, wobei:
die Steuerung (200) eine Neigungskompensation durchführt und dann, wenn das erste Lichtmuster an einer Referenzposition markiert ist, die Steuerung (200) einen Normalzustand bestimmt, in dem kein Hindernis vor dem mobilen Roboter vorhanden ist, und den mobilen Roboter so steuert, dass er kontinuierlich gefahren wird; und
wenn das erste Lichtmuster an der Referenzposition nicht markiert ist, die Steuerung (200) das Hindernis bestimmt und den mobilen Roboter so steuert, dass er so gefahren wird, dass er das Hindernis vermeidet.

3. Mobiler Roboter nach Anspruch 1, wobei:
wenn die Neigung des Körpers (10) gleich oder kleiner als ein vorbestimmter Winkel ist, die Steuerung (200) durch Neigungskompensation erneut bestimmt, ob das Hindernis vorhanden ist, und das Fahren des mobilen Roboters steuert; und
wenn die Neigung des Körpers (10) größer als der vorbestimmte Winkel ist, die Steuerung die auf dem ersten Lichtmuster basierende Bestimmung des Hindernisses ignoriert und den mobilen Roboter so steuert, dass er kontinuierlich so gefahren wird, dass ein Zustand vermieden wird, in dem der Körper (10) geneigt ist.

4. Mobiler Roboter nach Anspruch 3, wobei, wenn die Neigung des Körpers (10) größer ist als der vorbestimmte Winkel und das Hindernis keine Klippe ist, die Steuerung (200) die auf dem ersten Lichtmuster basierende Bestimmung des Hindernisses ignoriert.

5. Mobiler Roboter nach Anspruch 1, wobei:
wenn der Körper nicht geneigt ist, die Steuerung bestimmt, ob das Hindernis ein Neigungsweg ist;
wenn ein Neigungswinkel des Neigungsweges gleich oder kleiner als ein vorbestimmter Winkel ist, die Steuerung eine Neigungskompensation in Abhängigkeit vom Neigungswinkel durchführt und die Einfahrt in den Neigungsweg steuert; und
wenn der Neigungswinkel größer als der vorbestimmte Winkel ist, die Steuerung den mobilen Roboter so steuert, dass er den Neigungsweg vermeidet.

6. Mobiler Roboter nach Anspruch 1, wobei die Sensoreinheit (150) mindestens einen Neigungssensor zum Messen einer Neigungsrichtung von links, rechts, oben und unten und des Neigungswinkels des Körpers aufweist,
der Neigungssensor (150) mindestens einen Kippsensor oder einen Beschleunigungssensor aufweist.

7. Mobiler Roboter nach Anspruch 1, wobei:
die erste Musteremissionseinheit (120), die zweite Musteremissionseinheit (130) und die Bildaufnahmeeinrichtung (140) in einer Linie angeordnet sind;
die Bildaufnahmeeinrichtung (140) unter der zweiten Musteremissionseinheit angeordnet ist, und
die erste Musteremissionseinheit (120) und die zweite Musteremissionseinheit (130) so angeordnet sind, dass sie symmetrisch zueinander sind.

8. Verfahren zum Steuern eines mobilen Roboters, wobei das Verfahren aufweist:
Emittieren eines ersten Musterlichts und eines zweiten Musterlichts und Fahren des mobilen Roboters, während ein vor dem mobilen Roboter positioniertes Bild aufgenommen wird;
Erfassen eines ersten Lichtmusters, das dem ersten Musterlicht entspricht, und eines zweiten Lichtmusters, das dem zweiten Musterlicht entspricht, aus dem aufgenommenen Bild, um ein Hindernis zu erfassen;
Erfassen der Neigung eines Körpers (10) des mobilen Roboters;
wenn der Körper (10) geneigt ist, Durchführen einer Neigungskompensation am ersten Lichtmuster oder am zweiten Lichtmuster in Abhängigkeit von der Neigung; und
nachdem die Neigungskompensation durchgeführt ist, erneutes Bestimmen des Hindernisses und Fahren des mobilen Roboters, um das Hindernis zu passieren oder zu vermeiden,
**dadurch gekennzeichnet, dass** das Durchführen der Neigungskompensation das Einstellen einer Position des ersten Lichtmusters, um die Neigungskompensation so durchzuführen, dass sie einem Neigungswinkel des Körpers (10) entspricht, oder das Ändern einer Referenzposition in Bezug auf das erste Lichtmuster aufweist, um die Neigungskompensation so durchzuführen, dass sie einem Neigungswinkel des Körpers (10) entspricht.

9. Verfahren nach Anspruch 8, wobei das erneute Bestimmen des Hindernisses aufweist:
nachdem die Neigungskompensation durchgeführt ist, wenn sich das erste Lichtmuster in einem normalen Zustand befindet, Bestimmen, dass das Hindernis nicht vorhanden ist, und Fortsetzen des Fahrens des mobilen Roboters; und
wenn sich das erste Lichtmuster nicht in einem normalen Zustand befindet, Bestimmen des Hindernisses und das Fahren des mobilen Roboters, um das Hindernis zu vermeiden.

10. Verfahren nach Anspruch 8, das ferner aufweist:
wenn die Neigung des Körpers (10) gleich oder kleiner als ein vorbestimmter Winkel ist, erneutes Bestimmen, ob das Hindernis vorhanden ist, durch Neigungskompensation und Fahren des mobilen Roboters; und
wenn die Neigung des Körpers (10) größer als der vorbestimmte Winkel ist, Ignorieren der auf dem ersten Lichtmuster basierenden Bestimmung und kontinuierliches Fahren des mobilen Roboters, um von einem Zustand, in dem der Körper (10) geneigt ist, in einen normalen Zustand zurückzukehren, wobei, wenn die Neigung des Körpers (10) größer als ein vorbestimmter Winkel ist und das Hindernis keine Klippe ist, die auf dem ersten Lichtmuster basierende Bestimmung ignoriert wird.

11. Verfahren nach Anspruch 8, das ferner aufweist:
wenn der Körper nicht geneigt ist, Bestimmen, ob das Hindernis ein Neigungsweg ist;
wenn ein Neigungswinkel des Neigungsweges gleich oder kleiner als ein vorbestimmter Winkel ist, Durchführen einer Neigungskompensation in Abhängigkeit von der Neigung, um in den Neigungsweg einzufahren; und
wenn der Neigungswinkel größer als der vorbestimmte Winkel ist, Fahren des mobilen Roboters, um den Neigungsweg zu vermeiden.

## Revendications

1. Robot mobile, comprenant :
un corps (10) entraîné dans une zone de nettoyage ;
une unité de capteur (150) destinée à détecter une inclinaison du corps et à entrer un signal de détection ;
une unité d'émission de premier motif (120) disposée sur une surface avant du corps et destinée à émettre une lumière à premier motif vers le bas d'un côté avant du corps ;
une unité d'émission de deuxième motif (130) disposée sur la surface avant du corps, en dessous de l'unité d'émission de premier motif, et destinée à émettre une lumière à deuxième motif vers le haut du côté avant du corps ;
un acquisiteur d'image (140) disposé sur la surface avant du corps et destiné à acquérir une image du côté avant du corps ; et
un contrôleur (200) destiné à détecter un premier motif lumineux correspondant à la lumière à premier motif et un deuxième motif lumineux correspondant à la lumière à deuxième motif à partir de l'image acquise entrée par l'acquisiteur d'image, à déterminer un obstacle, et à exécuter une commande de franchissement ou d'évitement de l'obstacle, où le contrôleur (200) détermine si le corps est incliné sur la base du signal de détection entré par l'unité de capteur, et, si le corps est incliné, le contrôleur redétermine si l'obstacle est présent par compensation d'inclinaison par rapport au premier motif lumineux en fonction de l'inclinaison du corps,
**caractérisé en ce que** le corps est adapté pour absorber des substances étrangères sur un plancher dans la zone de nettoyage,
où le contrôleur (200) règle la position du premier motif lumineux pour effectuer une compensation d'inclinaison afin de correspondre à un angle d'inclinaison du corps (10), ou le contrôleur (200) change une position de référence par rapport au premier motif lumineux pour effectuer une compensation d'inclinaison afin de correspondre à un angle d'inclinaison du corps (10).

2. Robot mobile selon la revendication 1, où :
le contrôleur (200) effectue une compensation d'inclinaison, puis, si le premier motif lumineux est marqué sur une position de référence, le contrôleur (200) détermine un état normal où aucun obstacle n'est présent en avant du robot mobile et commande l'entraînement continu du robot mobile ; et,
si le premier motif lumineux n'est pas marqué sur la position de référence, le contrôleur (200) détermine l'obstacle et commande l'entraînement du robot mobile de manière à éviter l'obstacle.

3. Robot mobile selon la revendication 1, où :
si l'inclinaison du corps (10) est égale ou inférieure à un angle prédéfini, le contrôleur (200) redétermine si l'obstacle est présent par compensation d'inclinaison et commande l'entraînement du robot mobile ; et
si l'inclinaison du corps (10) est supérieure à l'angle prédéfini, le contrôleur ignore la détermination de l'obstacle sur la base du premier motif lumineux et commande l'entraînement continu du robot mobile pour éviter un état où le corps (10) est incliné.

4. Robot mobile selon la revendication 3, où, si l'inclinaison du corps (10) est supérieure à l'angle prédéfini et l'obstacle n'est pas une pente abrupte, le contrôleur (200) ignore la détermination de l'obstacle sur la base du premier motif lumineux.

5. Robot mobile selon la revendication 1, où :
si le corps n'est pas incliné, le contrôleur détermine si l'obstacle est une pente ;
si un angle d'inclinaison de la pente est égal ou inférieur à un angle prédéfini, le contrôleur effectue une compensation d'inclinaison en fonction de l'angle d'inclinaison et commande l'accès à la pente ; et
si l'angle d'inclinaison est supérieur à l'angle prédéfini, le contrôleur commande l'évitement de la pente par le robot mobile.

6. Robot mobile selon la revendication 1, où l'unité de capteur (150) comprend au moins un capteur d'inclinaison destiné à mesurer une direction d'inclinaison entre directions vers la gauche, la droite, le haut et le bas et l'angle d'inclinaison du corps,
le capteur d'inclinaison (150) comprend un capteur entre un capteur d'inclinaison et un capteur d'accélération.

7. Robot mobile selon la revendication 1, où :
l'unité d'émission de premier motif (120), l'unité d'émission de deuxième motif (130), et l'acquisiteur d'image (140) sont disposés en ligne ;
l'acquisiteur d'image (140) est disposé en dessous de l'unité d'émission de deuxième motif, et
l'unité d'émission de premier motif (120) et l'unité d'émission de deuxième motif (130) sont disposées symétriquement l'une à l'autre.

8. Procédé de commande d'un robot mobile, ledit procédé comprenant :
l'émission d'une lumière à premier motif et d'une lumière à deuxième motif et l'entraînement du robot mobile en capturant une image présentée en avant du robot mobile ;
la détection d'un premier motif lumineux correspondant à la lumière à premier motif et d'un deuxième motif lumineux correspondant à la lumière à deuxième motif à partir de l'image acquise capturée afin de détecter un obstacle ;
la détection d'une inclinaison d'un corps (10) de robot mobile ;
si le corps (10) est incliné, l'exécution d'une compensation d'inclinaison sur le premier motif lumineux ou le deuxième motif lumineux en fonction de l'inclinaison ; et
après exécution de la compensation d'inclinaison, la redétermination de l'obstacle et l'entraînement du robot mobile pour franchir ou éviter l'obstacle,
**caractérisé en ce que** l'exécution de la compensation d'inclinaison comprend le réglage d'une position du premier motif lumineux pour effectuer la compensation d'inclinaison afin de correspondre à un angle d'inclinaison du corps (10), ou le changement d'une position de référence par rapport au premier motif lumineux pour effectuer la compensation d'inclinaison afin de correspondre à un angle d'inclinaison du corps (10).

9. Procédé selon la revendication 8, où la redétermination de l'obstacle comprend :
après exécution de la compensation d'inclinaison, si le premier motif lumineux est dans un état normal, la détermination que l'obstacle n'est pas présent et le maintien de l'entraînement du robot mobile ; et
si le premier motif lumineux n'est pas dans un état normal, la détermination de l'obstacle et l'entraînement du robot mobile pour éviter l'obstacle.

10. Procédé selon la revendication 8, comprenant en outre :
si l'inclinaison du corps (10) est égale ou inférieure à un angle prédéfini, la redétermination si l'obstacle est présent par compensation d'inclinaison et l'entraînement du robot mobile ; et
si l'inclinaison du corps (10) est supérieure à l'angle prédéfini, la non-prise en compte de la détermination de l'obstacle sur la base du premier motif lumineux et l'entraînement continu du robot mobile pour revenir à un état normal depuis un état où le corps (10) est incliné, où, si l'inclinaison du corps (10) est supérieure à un angle prédéfini et l'obstacle n'est pas une pente abrupte, la détermination de l'obstacle sur la base du premier motif lumineux est ignorée.

11. Procédé selon la revendication 8, comprenant en outre :
si le corps n'est pas incliné, la détermination si l'obstacle est une pente ;
si un angle d'inclinaison de la pente est égal ou inférieur à un angle prédéfini, l'exécution d'une compensation d'inclinaison en fonction de l'inclinaison pour accéder à la pente ; et
si l'angle d'inclinaison est supérieur à l'angle prédéfini, l'entraînement du robot mobile pour éviter la pente.
